# EUROPEAN PATENT SPECIFICATION

(11) **EP 3 214 533 B1**
(45) Date of publication and mention of the grant of the patent: **04.09.2019**
(21) Application number: 14906775.3
(22) Date of filing: 28.11.2014
(51) Int. Cl.: G06F 3/0485, G06F 3/0488, G06F 1/16

(54) **METHOD AND TERMINAL FOR MOVING SCREEN INTERFACE**
VERFAHREN UND ENDGERÄT ZUM BEWEGEN EINER ANZEIGESCHNITTSTELLE
PROCÉDÉ ET TERMINAL POUR DÉPLACER UNE INTERFACE D'ÉCRAN

(43) Date of publication of application: 06.09.2017
(73) Proprietor: Huawei Technologies Co. Ltd., Shenzhen, Guangdong 518129 (CN)
(72) Inventor: GAO, Wenmei, Shenzhen Guangdong 518129 (CN); QIN, Chao, Shenzhen Guangdong 518129 (CN); WANG, Yahui, Shenzhen Guangdong 518129 (CN); JING, Hao, Shenzhen Guangdong 518129 (CN)
(74) Representative: Maiwald Patent- und Rechtsanwaltsgesellschaft mbH
(86) International application number: PCT/CN2014/092567
(87) International publication number: WO 2016/082215

(56) References cited:
- WO-A1-2009/090704
- CN-A- 101 630 223
- CN-A- 103 049 210
- CN-U- 203 894 737
- JP-A- 2012 173 842
- JP-A- 2014 085 754
- US-A1- 2004 125 993
- US-A1- 2013 239 032
- US-A1- 2014 204 063

## Description

### TECHNICAL FIELD

The present invention relates to the field of communications technologies, and in particular, to a screen interface moving method and a terminal.

### BACKGROUND

A large-screen mobile phone can bring better visual experience to a user. However, because a screen is relatively large, when the user performs an operation with one hand, some areas are beyond an accessible touch range of a thumb. As a result, operation efficiency is reduced.

In the prior art, a mobile phone captures and identifies a gesture of a user, and moves, according to the identified gesture, a screen interface to an area that can be touched by a thumb of the user. For example, the user may set a pull-down gesture as an instruction for pulling down a screen. After identifying the pull-down gesture of the user, the mobile phone moves down the screen interface, so that the thumb of the user can touch an upper area of the screen interface. Consequently, an operation time is relatively long, and an operation process is complex. In addition, as there are relatively undiversified types of gesture instruction, incorrect determining by the mobile phone is easily caused. For example, if a pull-down gesture is set in given functions of some mobile phones as an instruction for entering a search interface, the mobile phone probably jumps to the search interface when the mobile phone identifies the pull-down gesture, causing incorrect identification.

In another manner, a screen interface is scaled down according to a detected angle of inclination of a mobile phone, and the screen interface is shown in a particular area of a screen. Alternatively, a dial pad in a screen interface is moved towards an inclined side according to a detected angle of inclination of a mobile phone, without moving the screen interface as a whole.

To sum up, operation processes of the foregoing methods provided in the prior art are complex, and operation efficiency is relatively low.

JP 2014 085 754 A discloses a system and method to invoke, by pressing on the mobile device, a screen interface moving function, so as to bring items that were previously out of the range of a thumb of the hand holding the device into this range.

US 2014/204 063 A1 discloses another such method that evaluates the gripping force with which the mobile device is held to determine the intention to move the screen interface, as well as its direction and amount.

### SUMMARY

The present invention provides a screen interface moving method and a terminal, so as to move a screen interface by a preset distance by detecting pressure that is applied on a terminal by a user with one hand.

To resolve the foregoing technical problem, a first aspect of the present invention provides a screen interface moving method, including:
detecting pressure that is applied on at least one side of a terminal, to obtain a first pressure distribution feature;
comparing the first pressure distribution feature with a pressure distribution feature in a pre-generated set, to obtain a second pressure distribution feature that matches the first pressure distribution feature;
determining, according to a preset correspondence between a pressure distribution feature and a movement direction, a movement direction corresponding to the second pressure distribution feature; and
moving a screen interface by a preset distance in the determined movement direction.

The movement direction is a direction of a connection line from a touch point that is applied on the screen interface to a reference point, and the reference point is a reference point preset on a preset edge of a screen, and before the detecting pressure that is applied on at least one side of a terminal, the method further includes:
capturing the touch point that is applied on the screen interface;
detecting pressure that is applied on the at least one side of the terminal when the touch point is captured, to obtain the pressure distribution feature;
determining the connection line between the touch point and the reference point, and calculating an angle between the connection line and the preset edge of the screen, to determine the direction of the connection line according to the angle;
establishing a correspondence between the pressure distribution feature and the angle; and
saving at least one correspondence, to generate the set.

A condition for the detecting pressure that is applied on the at least one side of the terminal when the touch point is captured is: the touch point falls within a preset area.

With reference to the implementation manner of the first aspect of the present invention, in a first possible implementation manner of the first aspect of the present invention, the comparing the first pressure distribution feature with a pressure distribution feature in a pre-generated set, to obtain a second pressure distribution feature that matches the first pressure distribution feature specifically includes:
calculating a similarity between the first pressure distribution feature and a pressure distribution feature in the set; and
determining that a pressure distribution feature with a similarity greater than or equal to a preset threshold is the second pressure distribution feature.

With reference to the implementation manner of the first aspect of the present invention, in a second possible implementation manner of the first aspect of the present invention, before the detecting pressure that is applied on at least one side of a terminal, the method further includes:
detecting first inclination state data of the terminal, where the first inclination state data includes a first acceleration in a preset reference direction; and
a condition for the detecting pressure that is applied on at least one side of a terminal is: the first acceleration falls within a preset range.

With reference to the fourth possible implementation manner of the first aspect of the present invention, in a third possible implementation manner of the first aspect of the present invention, before the detecting first inclination state data of the terminal, the method further includes:
detecting inclination state data of the terminal, where the inclination state data includes an acceleration in the reference direction; and
determining the range according to at least one acceleration.

With reference to the implementation manner of the first aspect of the present invention, in a fourth possible implementation manner of the first aspect of the present invention, the moving a screen interface by a preset distance in the determined movement direction specifically includes:
after scaling up or scaling down the screen interface according to a preset scale, moving the scaled-up or scaled-down screen interface by the preset distance in the determined movement direction; or
after moving the screen interface by the preset distance in the determined movement direction, scaling up or scaling down the moved screen interface according to the preset scale.

A second aspect of the present invention provides a terminal, including:
a first detection module, configured to detect pressure that is applied on at least one side of a terminal, to obtain a first pressure distribution feature;
a comparison module, configured to compare the first pressure distribution feature obtained by the first detection module with a pressure distribution feature in a pre-generated set, to obtain a second pressure distribution feature that matches the first pressure distribution feature;
a first determining module, configured to determine, according to a preset correspondence between a pressure distribution feature and a movement direction, a movement direction corresponding to the second pressure distribution feature obtained by the comparison module; and
a movement module, configured to move a screen interface by a preset distance in the movement direction determined by the first determining module.

The movement direction is a direction of a connection line from a touch point that is applied on the screen interface to a reference point, and the reference point is a reference point preset on a preset edge of a screen, and the terminal further includes:
a capturing module, configured to capture the touch point that is applied on the screen interface, where
the first detection module is further configured to detect pressure that is applied on the at least one side of the terminal when the capturing module captures the touch point, to obtain the pressure distribution feature;
a calculation module, configured to: determine the connection line between the touch point captured by the capturing module and the reference point, and calculate an angle between the connection line and the preset edge of the screen, to determine the direction of the connection line according to the angle;
an establishment module, configured to establish a correspondence between the pressure distribution feature and the angle; and
a generation module, configured to save at least one correspondence, to generate the set.

A condition for the detecting, by the first detection module, pressure that is applied on the at least one side of the terminal when the touch point is captured is: the touch point falls within a preset area.

With reference to the implementation manner of the second aspect of the present invention, in a first possible implementation manner of the second aspect of the present invention, the comparison module includes:
a calculation unit, configured to calculate a similarity between the first pressure distribution feature and a pressure distribution feature in the set; and
a determining unit, configured to determine that a pressure distribution feature with a similarity greater than or equal to a preset threshold is the second pressure distribution feature.

With reference to the implementation manner of the second aspect of the present invention, in a second possible implementation manner of the second aspect of the present invention, the terminal further includes:
a second detection module, configured to detect first inclination state data of the terminal, where the first inclination state data includes a first acceleration in a preset reference direction; and
a condition for the detecting, by the first detection module, pressure that is applied on at least one side of a terminal is: the first acceleration falls within a preset range.

With reference to the fourth possible implementation manner of the second aspect of the present invention, in a third possible implementation manner of the second aspect of the present invention, the second detection module is further configured to detect inclination state data of the terminal, where the inclination state data includes an acceleration in the reference direction; and
the terminal further includes:
a second determining module, configured to determine the range according to at least one acceleration.

With reference to the implementation manner of the second aspect of the present invention, in a fourth possible implementation manner of the second aspect of the present invention, the movement module is further specifically configured to:
after scaling up or scaling down the screen interface according to a preset scale, move the scaled-up or scaled-down screen interface by the preset distance in the movement direction determined by the first determining module; or
after moving the screen interface by the preset distance in the movement direction determined by the first determining module, scale up or scale down the moved screen interface according to the preset scale.

A third aspect of the present invention not presently claimed provides a terminal, including an input apparatus, an output apparatus, and a processor, where
the input apparatus is configured to detect pressure that is applied on at least one side of the terminal, to obtain a first pressure distribution feature;
the processor is configured to compare the first pressure distribution feature obtained by the input apparatus with a pressure distribution feature in a pre-generated set, to obtain a second pressure distribution feature that matches the first pressure distribution feature;
the processor is further configured to determine, according to a preset correspondence between a pressure distribution feature and a movement direction, a movement direction corresponding to the second pressure distribution feature; and
the output apparatus is configured to move a screen interface by a preset distance in the movement direction determined by the processor.

With reference to the implementation manner of the third aspect of the present invention, in a first possible implementation manner of the third aspect of the present invention, the movement direction is a direction of a connection line from a touch point that is applied on the screen interface to a reference point, and the reference point is a reference point preset on a preset edge of a screen, and the input apparatus is further configured to capture the touch point that is applied on the screen interface;
the input apparatus is further configured to detect pressure that is applied on the at least one side of the terminal when the touch point is captured, to obtain the pressure distribution feature;
the processor is further configured to: determine the connection line between the touch point and the reference point, and calculate an angle between the connection line and the preset edge of the screen, to determine the direction of the connection line according to the angle;
the processor is further configured to establish a correspondence between the pressure distribution feature and the angle; and
the processor is further configured to save at least one correspondence, to generate the set.

With reference to the first possible implementation manner of the third aspect of the present invention, in a second possible implementation manner of the third aspect of the present invention, a condition for the detecting, by the input apparatus, pressure that is applied on the at least one side of the terminal when the touch point is captured is: the touch point falls within a preset area.

With reference to the implementation manner of the third aspect of the present invention, in a third possible implementation manner of the third aspect of the present invention, for the comparing, by the processor, the first pressure distribution feature with a pressure distribution feature in a pre-generated set, to obtain a second pressure distribution feature that matches the first pressure distribution feature, the following steps are performed:
calculating a similarity between the first pressure distribution feature and a pressure distribution feature in the set; and
determining that a pressure distribution feature with a similarity greater than or equal to a preset threshold is the second pressure distribution feature.

With reference to the implementation manner of the third aspect of the present invention, in a fourth possible implementation manner of the third aspect of the present invention, the input apparatus is further configured to detect first inclination state data of the terminal, where the first inclination state data includes a first acceleration in a preset reference direction; and
a condition for the detecting, by the input apparatus, pressure that is applied on at least one side of the terminal is: the first acceleration falls within a preset range.

With reference to the fourth possible implementation manner of the third aspect of the present invention, in a fifth possible implementation manner of the third aspect of the present invention, the input apparatus is further configured to detect inclination state data of the terminal, where the inclination state data includes an acceleration in the reference direction; and
the processor is further configured to determine the range according to at least one acceleration.

With reference to the implementation manner of the third aspect of the present invention, in a sixth possible implementation manner of the third aspect of the present invention, for the moving, by the output apparatus, a screen interface by a preset distance in the movement direction determined by the processor, the following steps are performed:
after scaling up or scaling down the screen interface according to a preset scale, moving the scaled-up or scaled-down screen interface by the preset distance in the determined movement direction; or
after moving the screen interface by the preset distance in the determined movement direction, scaling up or scaling down the moved screen interface according to the preset scale.

According to the present invention, pressure that is applied on at least one side of a terminal may be detected, to obtain a first pressure distribution feature; the first pressure distribution feature is compared with a pressure distribution feature in a pre-generated set, to obtain a second pressure distribution feature that matches the first pressure distribution feature; a movement direction corresponding to the second pressure distribution feature is determined according to a preset correspondence between a pressure distribution feature and a movement direction; and a screen interface is moved by a preset distance in the determined movement direction. The screen interface is moved by the preset distance by detecting pressure that is applied on the terminal by a user with one hand, so that the user can touch all areas of the screen interface when the user uses the terminal with one hand. An operation process is simple and convenient.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of an embodiment of a screen interface moving method according to an embodiment of the present invention;
FIG. 2 is a schematic diagram showing that a terminal is subject to a force according to an embodiment of the present invention;
FIG. 3a is a diagram of distribution of pressure sensors on a first side of the terminal according to an embodiment of the present invention;
FIG. 3b is a diagram of distribution of pressure sensors on a second side of the terminal according to an embodiment of the present invention;
FIG. 3c is a diagram of distribution of pressure sensors on a third side of the terminal according to an embodiment of the present invention;
FIG. 4 is a schematic flowchart of another embodiment of a screen interface moving method according to an embodiment of the present invention;
FIG. 5 is a schematic diagram of specified areas in another embodiment of a screen interface moving method according to an embodiment of the present invention;
FIG. 6 is a diagram of a pressure distribution feature curve in another embodiment of a screen interface moving method according to an embodiment of the present invention;
FIG. 7 is a schematic diagram of a first set table in another embodiment of a screen interface moving method according to an embodiment of the present invention;
FIG. 8 is a schematic flowchart of a third embodiment of a screen interface moving method according to an embodiment of the present invention;
FIG. 9 is a schematic diagram of an inclination state data table in the third embodiment of the screen interface moving method according to an embodiment of the present invention;
FIG. 10 is a schematic diagram of a second set table in the third embodiment of the screen interface moving method according to an embodiment of the present invention;
FIG. 11 is a schematic flowchart of a fourth embodiment of a screen interface moving method according to an embodiment of the present invention;
FIG. 12 is a schematic structural diagram of an embodiment of a terminal according to an embodiment of the present invention;
FIG. 13 is a schematic structural diagram of another embodiment of a terminal according to an embodiment of the present invention; and
FIG. 14 is a schematic structural diagram of a third embodiment of a terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention.

The embodiments of the present invention provide a screen interface moving method and a terminal, so as to move a screen interface by a preset distance by detecting pressure that is applied on a terminal by a user with one hand.

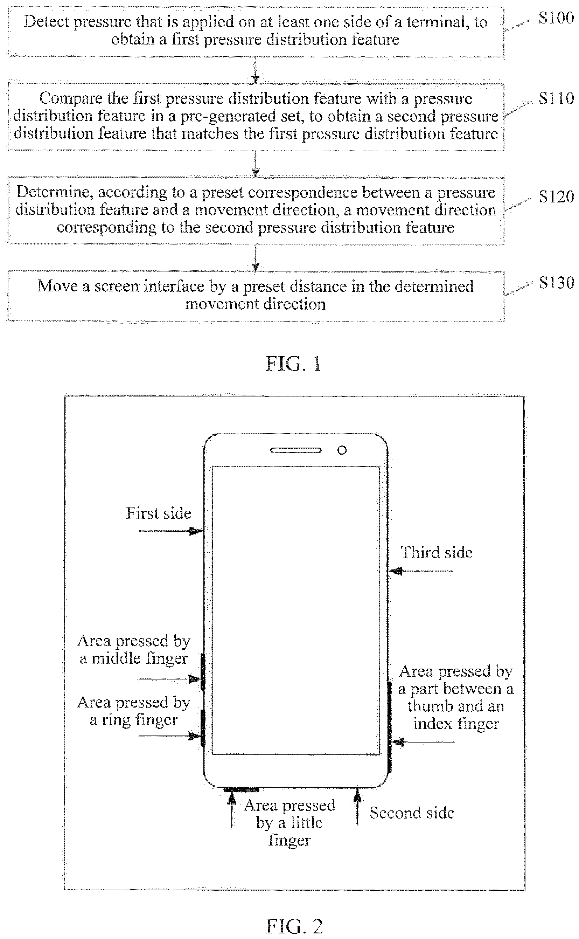

Referring to FIG. 1, FIG. 1 is a schematic structural diagram of an embodiment of a screen interface moving method according to an embodiment of the present invention. A terminal involved in the present invention may be any mobile or portable electronic device, including, but not limited to, an electronic device such as a mobile phone, a mobile computer, a tablet computer, a personal digital assistant, or a media player. In this embodiment, a piezoelectric sensor may be used to detect pressure that is applied on a terminal. A pressure sensor, also referred to as a piezoelectric sensor, is a sensor that is manufactured by using a piezoelectric effect that is generated after some dielectrics are subject to a force. The piezoelectric effect refers to a phenomenon in which an electric charge is generated on surfaces of some dielectrics because of a polarization phenomenon of an internal electric charge when the dielectrics are deformed under the action of an external force in a direction. In addition, the pressure sensor may also be a piezoelectric film sensor. The piezoelectric film sensor is very sensitive to dynamic stress, and therefore, can accurately detect pressure from different parts of a user hand. A user may hold a terminal with the left hand or the right hand. In this embodiment, descriptions are provided by using an example in which a user holds a mobile phone with the right hand.

S100. Detect pressure that is applied on at least one side of a terminal, to obtain a first pressure distribution feature.

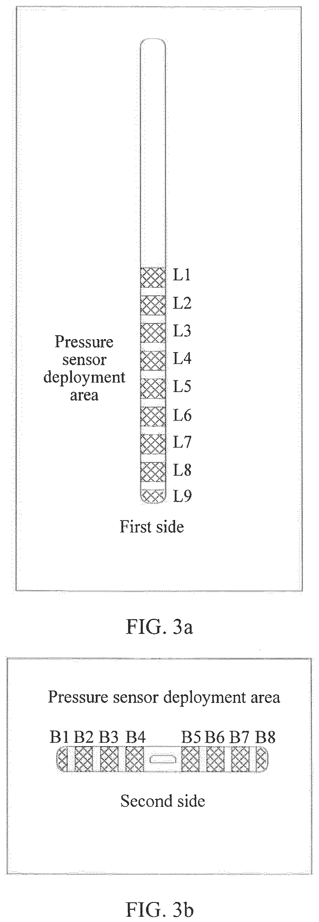

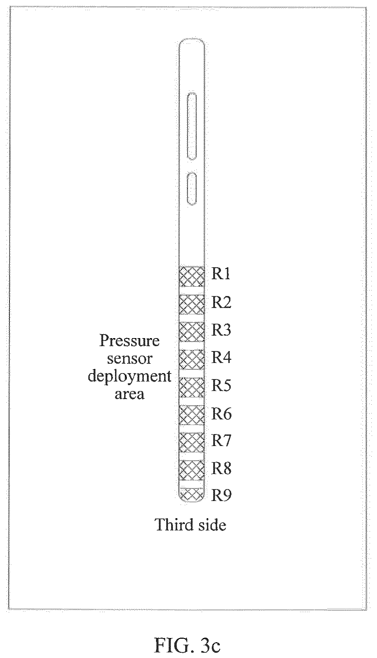

In a specific implementation, as shown in FIG. 2, when a user holds a terminal with the right hand, the terminal may be subject to pressure from parts of the right hand such as a part between the thumb and the index finger, the little finger, the ring finger, and the middle finger. Therefore, as shown in FIG. 3a, FIG. 3b, and FIG. 3c, pressure sensors may be separately deployed on a first side, a second side, and a third side of the terminal. A quantity of the pressure sensors is not limited in this embodiment. Therefore, the first side of the terminal may include an area in which pressing by the middle finger and the ring finger is detected, the second side may include an area in which pressing by the little finger is detected, and the third side may include an area in which pressing by the part between the thumb and the index finger is detected. After detecting the pressure generated by holding by the user, the pressure sensors distributed on the first side, the second side, and the third side of the terminal generate a first pressure distribution feature according to pressure detected by each pressure sensor.

S110. Compare the first pressure distribution feature with a pressure distribution feature in a pre-generated set, to obtain a second pressure distribution feature that matches the first pressure distribution feature.

In a specific implementation, a set includes at least one pressure distribution feature that is generated when the user holds the terminal with the right hand. The terminal collects and saves the at least one pressure distribution feature in advance, to generate the set. After the first pressure distribution feature is generated according to the pressure detected by each pressure sensor, the first pressure distribution feature is compared with each saved pressure distribution feature in the set, and a second pressure distribution feature that matches the first pressure distribution feature is finally found from the set.

S120. Determine, according to a preset correspondence between a pressure distribution feature and a movement direction, a movement direction corresponding to the second pressure distribution feature.

In a specific implementation, the set not only includes the at least one pressure distribution feature, but also includes a correspondence between a pressure distribution feature and a movement direction. After the second pressure distribution feature that matches the first pressure distribution feature is obtained in the foregoing step, a movement direction corresponding to the second pressure distribution feature is determined. The movement direction is a movement direction corresponding to the first pressure distribution feature. The movement direction is used to enable the terminal to move a screen interface in the movement direction. A movement direction corresponding to a pressure distribution feature may be an arbitrarily specified movement direction, or a movement direction that is calculated according to the pressure distribution feature and a preset rule, which is not limited in this embodiment.

S130. Move a screen interface by a preset distance in the determined movement direction.

In a specific implementation, the terminal may move the screen interface by a preset distance along the movement direction, so that the thumb of the user can touch an area that cannot be touched by the thumb in a normal condition.

In an implementable manner, because an interface part that is moved outside a screen is hidden and invisible, the user may subsequently slide the screen interface as needed, so that the thumb of the user can touch all areas of the screen interface.

In an implementable manner, the movement direction may further be used to enable the terminal to scale up or scale down and move the screen interface along the movement direction according to a preset scale. After scaling up or scaling down the screen interface according to the preset scale, the terminal may move the scaled-up or scaled-down screen interface by the preset distance in the determined movement direction; or after moving the screen interface by the preset distance in the determined movement direction, the terminal scales up or scales down the moved screen interface according to the preset scale.

In an implementable manner, the terminal may maintain the moved screen interface for a preset time, and then restore the screen interface to a normal state; or wait for an instruction entered by the user, to restore the screen interface to a normal state, and continue to go back to step S100.

According to this embodiment of the present invention, pressure that is applied on at least one side of a terminal may be detected, to obtain a first pressure distribution feature; the first pressure distribution feature is compared with a pressure distribution feature in a pre-generated set, to obtain a second pressure distribution feature that matches the first pressure distribution feature; a movement direction corresponding to the second pressure distribution feature is determined according to a preset correspondence between a pressure distribution feature and a movement direction; and a screen interface is moved by a preset distance in the determined movement direction. The screen interface is moved by the preset distance by detecting pressure that is applied on the terminal by a user with one hand, so that the user can touch all areas of the screen interface when the user uses the terminal with one hand. An operation process is simple and convenient.

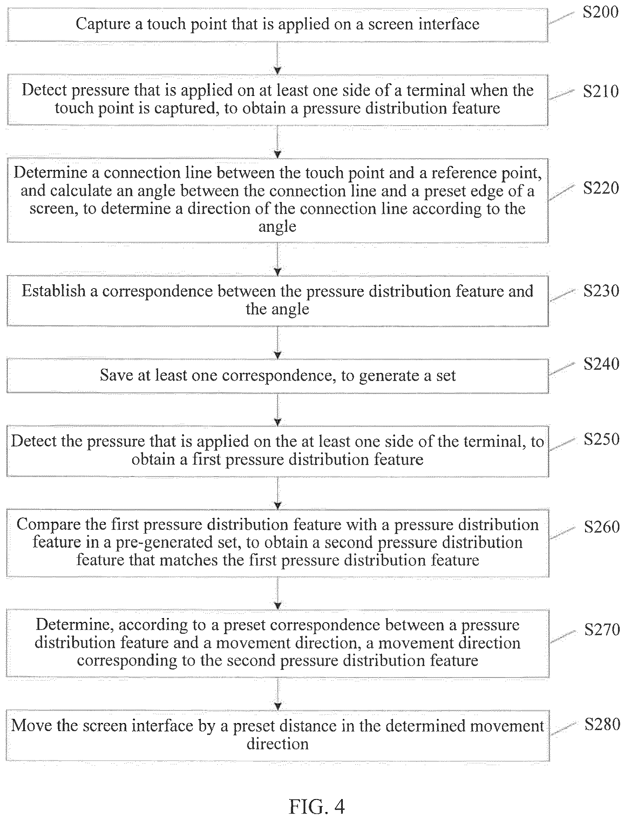

Referring to FIG. 4, FIG. 4 is a schematic structural diagram of another embodiment of a screen interface moving method according to an embodiment of the present invention. A screen of a terminal in this embodiment may be a touch panel, and can collect an operation action of a touch of a user on the touch panel or an operation action of a user near the touch panel. In this embodiment, when a correspondence between a pressure distribution feature and a movement direction is established, a movement direction is calculated according to a collected pressure distribution feature and a preset rule. Optionally, the movement direction is a direction of a connection line from a touch point that is applied on the screen interface to a reference point, and the reference point is a reference point preset on a preset edge of the screen. When the user holds the terminal, the user uses a thumb to arbitrarily touch the screen interface. The touch panel detects a touch operation of the user, converts the touch operation into coordinates of a touch point, and finally determines a movement direction according to the coordinates of the touch point. The user may hold a mobile phone with the left hand or the right hand. In this embodiment, descriptions are provided by still using an example in which a user holds a mobile phone with the right hand. Detailed descriptions are provided below.

S200. Capture the touch point that is applied on the screen interface.

In a specific implementation, the terminal needs to first collect at least one pressure distribution feature of the user as a reference object, establish a correspondence between a pressure distribution feature and a movement direction, and finally generate a set. When the terminal subsequently detects pressure applied by the user with the right hand, the terminal compares the pressure with the reference object in the set. Therefore, when the terminal collects these reference objects, the terminal needs to first obtain a touch point at which the thumb of the user taps the screen interface.

Optionally, a condition for the detecting pressure that is applied on at least one side of the terminal when the touch point is captured is: the touch point falls within a preset area.

In a specific implementation, after capturing the touch point that is applied on the screen interface, the terminal determines whether the touch point falls within the preset area. If the touch point falls within the preset area, the terminal performs step S210. If the touch point falls outside the preset area, the touch point captured this time is invalid, and the terminal prompts the user to recollect a touch point.

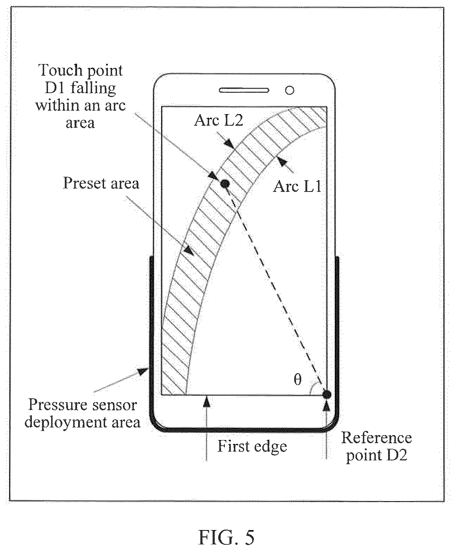

In an implementable manner, the terminal may preset the area. As shown in FIG. 5, the terminal may prompt the user to hold the terminal with the right hand, and to use the thumb to draw an arc, for example, an arc L1, on the screen interface, to set an area. After collecting the arc L1 that is applied on the screen interface, the terminal may set a width of an arc area according to a selection by the user. Finally, the terminal sets an arc L2 (the arc L2 shown in FIG. 5 may be set above the arc L1, and optionally, the arc L2 may be set below the arc L1) on a preset side of the arc L1 according to the specified width of the arc area, and an area between the arc L1 and the arc L2 is the area.

In an implementable manner, the arc L2 may also be entered by the user. When the terminal collects and determines the arc L1 that is applied on the screen interface, the terminal may prompt the user again to draw a second arc (the arc L2) on the screen interface. Therefore, the terminal determines the area according to the arc L1 and the arc L2 that are entered by the user.

In an implementable manner, the area may also be formed by a straight line, a broken line, or any curve, or a closed polygon may form the area, which is not limited in this embodiment.

S210. Detect pressure that is applied on at least one side of the terminal when the touch point is captured, to obtain the pressure distribution feature.

In a specific implementation, when the user uses the thumb to tap the screen interface, the right hand applies pressure on the terminal. As shown in FIG. 5, the terminal captures a touch point D1 that is applied on the screen interface, and determines whether the touch point D1 falls within the area. If the terminal determines that the touch point D1 falls within the area, as shown in FIG. 2, the terminal detects pressure that is applied on a first side, a second side, and a third side of the terminal, and obtains a pressure distribution feature.

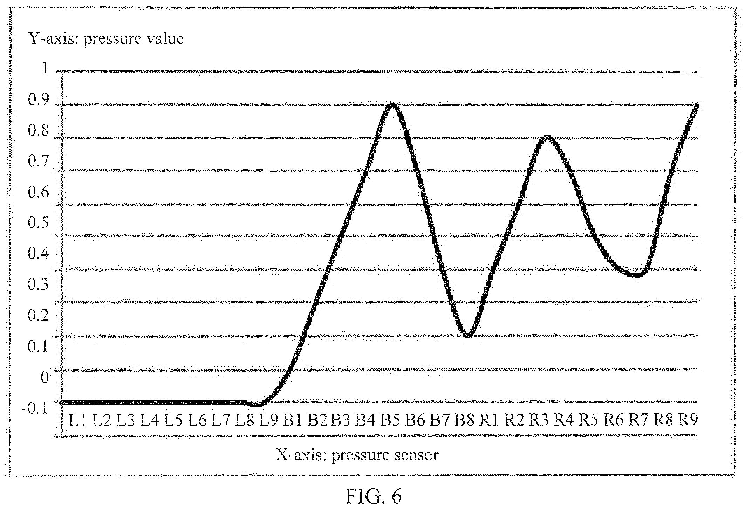

In an implementable manner, as shown in FIG. 3a to FIG. 3c, at least one pressure sensor is distributed on each of the first side, the second side, and the third side of the terminal. For example, in FIG. 3a, pressure sensors L1 to L9 may be deployed on the first side of the terminal, pressure sensors B1 to B8 may be deployed on the second side of the terminal, and pressure sensors R1 to R9 may be deployed on the third side of the terminal. Therefore, after each pressure sensor detects pressure that is applied by all parts of the right hand of the user, the terminal obtains, according to pressure values detected by all the pressure sensors, a distribution feature of pressure tested by the user this time, to generate a pressure distribution feature curve shown in FIG. 6. A horizontal axis of the pressure distribution feature curve shown in FIG. 6 represents names of all the pressure sensors on the first side to the third side, and a vertical axis represents pressure values detected by all the pressure sensors. The pressure distribution feature curve is generated according to the pressure values detected by all the pressure sensors, and then the pressure distribution feature curve is filtered to remove burrs, to form a relatively smooth curve. As can be seen with reference to the pressure distribution feature curve in FIG. 6 and the schematic diagram showing that a terminal is subject to a force in FIG. 2, if the user uses the right hand and inclines the terminal entirely towards the third side, the terminal is mainly subject to pressure from the little finger and the part between the thumb and the index finger, and pressure values detected by the pressure sensors on the first side of the terminal are almost zero. The pressure sensors on the second side and the pressure sensors on the third side of the terminal can detect the applied pressure. In this case, the pressure distribution feature is mainly embodied on the second side and the third side of the terminal.

S220. Determine the connection line between the touch point and the reference point, and calculate an angle between the connection line and the preset edge of the screen, to determine a direction of the connection line according to the angle.

In a specific implementation, as shown in FIG. 5, a first edge of the screen is set to be a preset edge, and a reference point D2 is preset on the first edge of the screen. After capturing the touch point D1 that is applied on the screen interface, the terminal determines a connection line between the touch point D1 and the reference point D2, and calculates an angle between the connection line and the first edge of the screen. An angle θ between the touch point D1 and the first edge of the screen is calculated, and therefore, a direction of a connection line (that is, the connection line between the touch point D1 and the reference point D2) corresponding to the angle θ is determined, that is, a movement direction of the screen interface is determined.

In an implementable manner, an order of performing step S210 and step S220 is not limited.

S230. Establish a correspondence between the pressure distribution feature and the angle.

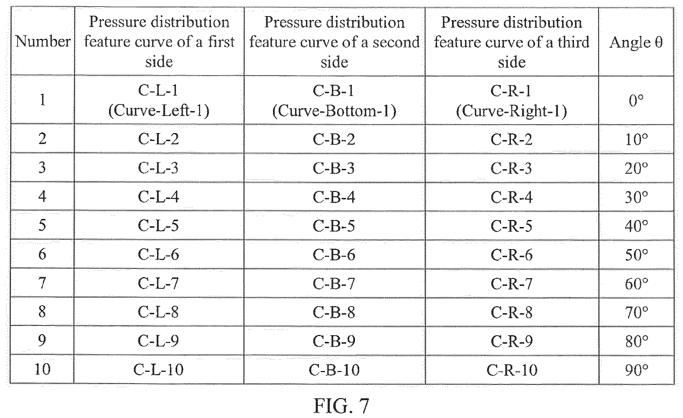

In a specific implementation, after the pressure distribution feature curve and the angle are obtained, a correspondence is established. In a first set table shown in FIG. 7, the pressure distribution feature curve is split into a pressure distribution feature curve of the first side, a pressure distribution feature curve of the second side, and a pressure distribution feature curve of the third side of the terminal, so as to subsequently compare a pressure distribution feature curve obtained on each side of the terminal with a pressure distribution feature curve of a corresponding side in the set. The pressure distribution feature curve of each of the three sides of the terminal corresponds to the angle calculated in step S220, that is, a correspondence between a pressure distribution feature curve and an angle is established.

S240. Store at least one correspondence, to generate a set.

In a specific implementation, after establishing the foregoing correspondence, the terminal repeats step S200 to step S230, collects at least once a touch point of entering by the user, obtains pressure that is applied on the first side to the third side of the terminal when the touch point is collected, and establishes a correspondence between a pressure distribution feature and an angle. After performing collection for a preset quantity of times, the terminal saves all correspondences, and finally generates the first set table, to provide a reference for a subsequently obtained pressure distribution feature.

In an implementable manner, pressure distribution feature curves with similar angles may be classified as one class. For example, a pressure distribution feature curve corresponding to an angle of 28°, a pressure distribution feature curve corresponding to an angle of 30°, and a pressure distribution feature curve corresponding to an angle of 32° may be aggregated, to be classified as pressure distribution feature curves corresponding to an angle of 30°. Then other pressure distribution feature curves are classified in a same manner.

S250. Detect the pressure that is applied on the at least one side of the terminal, to obtain a first pressure distribution feature.

In a specific implementation, after generating the first set table, the terminal may enable a detection function according to a setting of the user, or may enable a detection function after the terminal is powered on. When the user holds the terminal with the right hand, the pressure sensors on the three sides of the terminal detect respective pressure that the three sides are subject to, to generate a first pressure distribution feature, and draw a first pressure distribution feature curve.

S260. Compare the first pressure distribution feature with a pressure distribution feature in the pre-generated set, to obtain a second pressure distribution feature that matches the first pressure distribution feature.

In a specific implementation, the first pressure distribution feature curve is split into a pressure distribution feature curve of the first side, a pressure distribution feature curve of the second side, and a pressure distribution feature curve of the third side of the terminal, and the pressure distribution feature curves are respectively compared with pressure distribution feature curves of corresponding sides that are saved in the first set table of FIG. 7, to find a pressure distribution feature curve that matches the first pressure distribution feature curve. For example, after the pressure distribution feature curve of the first side, the pressure distribution feature curve of the second side, and the pressure distribution feature curve of the third side are respectively compared with the pressure distribution feature curves of the corresponding sides in the first set table, it is found that the pressure distribution feature curve that matches the first pressure distribution feature curve is pressure distribution feature curve number 5. Therefore, it is determined that pressure distribution feature curve number 5 is the second pressure distribution feature curve, and an angle corresponding to pressure distribution feature curve number 5 is 40°.

Optionally, step S260 may include step S261 (not shown in the figure) and step S262 (not shown in the figure).

S261. Calculate a similarity between the first pressure distribution feature and a pressure distribution feature in the set.

In a specific implementation, a manner in which the terminal compares to determine whether pressure distribution feature curves match may be: calculating a similarity between the first pressure distribution feature curve and a pressure distribution feature curve already saved in the first set table, and determining whether the calculated similarity is greater than a preset threshold. Specifically, the terminal calculates a similarity between the first pressure distribution feature curve and pressure distribution feature curve number 5, and determines whether the similarity exceeds a threshold (for example, 90%). If the terminal determines that the similarity exceeds the threshold, the terminal determines that pressure distribution feature curve number 5 is the second pressure distribution feature curve. If the terminal determines that the similarity does not exceed the threshold, the terminal continues to calculate a similarity between the first pressure distribution feature curve and a next pressure distribution feature curve.

In an implementable manner, a manner in which the terminal compares to determine whether pressure distribution feature curves match may also be: comparing to determine whether each pressure value of the first pressure distribution feature curve falls within a preset range of a corresponding pressure value of a pressure distribution feature curve in the first set table. If a quantity of pressure values meeting the foregoing condition exceeds a preset quantity, the terminal may determine that a pressure distribution feature curve meeting the foregoing condition is the second pressure distribution feature curve, and determine an angle corresponding to the pressure distribution feature curve.

S262. Determine that a pressure distribution feature with a similarity greater than or equal to a preset threshold is the second pressure distribution feature.

In a specific implementation, when the terminal determines that the similiarity is greater than or equal to the preset threshold, the terminal determines that pressure distribution feature curve number 5 is the second pressure distribution feature curve, and obtains a corresponding angle of 40° according to a correspondence between pressure distribution feature curve number 5 and the angle.

S270. Determine, according to the preset correspondence between a pressure distribution feature and a movement direction, a movement direction corresponding to the second pressure distribution feature.

In a specific implementation, after obtaining the angle corresponding to pressure distribution feature curve number 5, the terminal determines that a movement direction is a direction of a connection line corresponding to the angle, that is, a movement direction of a corresponding connection line between the touch point D1 and the reference point D2 when the angle θ is 40°.

S280. Move the screen interface by a preset distance in the determined movement direction.

In a specific implementation, the terminal may move the screen interface by a preset distance along the movement direction, so that the thumb of the user can touch an area that cannot be touched by the thumb in a normal condition.

In an implementable manner, because an interface part that is moved outside a screen is hidden and invisible, the user may subsequently slide the screen interface as needed, so that the thumb of the user can touch all areas of the screen interface.

In an implementable manner, the movement direction may further be used to enable the terminal to scale up or scale down and move the screen interface along the movement direction according to a preset scale. After scaling up or scaling down the screen interface according to the preset scale, the terminal may move the scaled-up or scaled-down screen interface by the preset distance in the determined movement direction; or after moving the screen interface by the preset distance in the determined movement direction, the terminal scales up or scales down the moved screen interface according to the preset scale.

In an implementable manner, the terminal may maintain the moved screen interface for a preset time, and then restore the screen interface to a normal state; or wait for an instruction entered by the user, to restore the screen interface to a normal state, and continue to go back to step S250.

According to this embodiment of the present invention, a set of pressure distribution features may be established first; then pressure that is applied on at least one side of a terminal is detected, to obtain a first pressure distribution feature; the first pressure distribution feature is compared with a pressure distribution feature in the set, to obtain a second pressure distribution feature that matches the first pressure distribution feature; an angle corresponding to the second pressure distribution feature is determined according to a preset correspondence between a pressure distribution feature and an angle; and a screen interface is moved by a preset distance in a direction of a connection line corresponding to the determined angle. The screen interface is moved by the preset distance by detecting pressure that is applied on the terminal by a user with one hand, so that the user can touch all areas of the screen interface when the user uses the terminal with one hand. An operation process is simple and convenient.

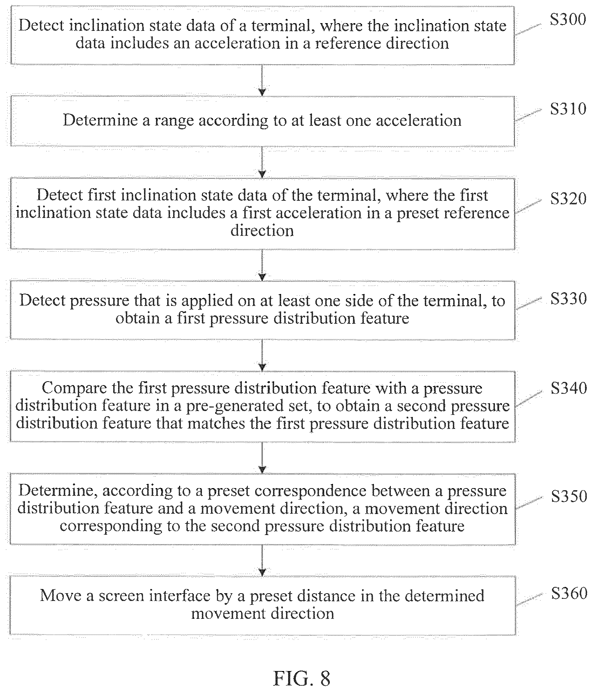

Referring to FIG. 8, FIG. 8 is a schematic flowchart of a third embodiment of a screen interface moving method according to an embodiment of the present invention. When establishing a correspondence between a pressure distribution feature and a movement direction, a terminal in this embodiment may directly set, according to entering by a user, a movement direction corresponding to a pressure distribution feature. In addition, before the terminal detects pressure that is applied on at least one side of the terminal, determining of an inclination state by the terminal may be added, so that the terminal can move a screen interface according to the detected pressure and the inclination state of the terminal. The user may hold a mobile phone with the left hand or the right hand. In this embodiment, descriptions are provided by still using an example in which a user holds a mobile phone with the right hand. Detailed descriptions are provided below.

S300. Detect inclination state data of the terminal, where the inclination state data includes an acceleration in a reference direction.

In a specific implementation, it is mentioned in FIG. 4 of the embodiments that if the user uses the right hand and inclines the terminal entirely towards the third side, the terminal is mainly subject to pressure from the little finger and the part between the thumb and the index finger. Therefore, the terminal may further detect current inclination state data, including an acceleration in a preset reference direction. The reference direction may be directions of three axes X, Y, and Z. For example, the terminal may detect accelerations in the directions of the three axes X, Y, and Z by using a tri-axis accelerometer, and saves a value of an acceleration in each direction.

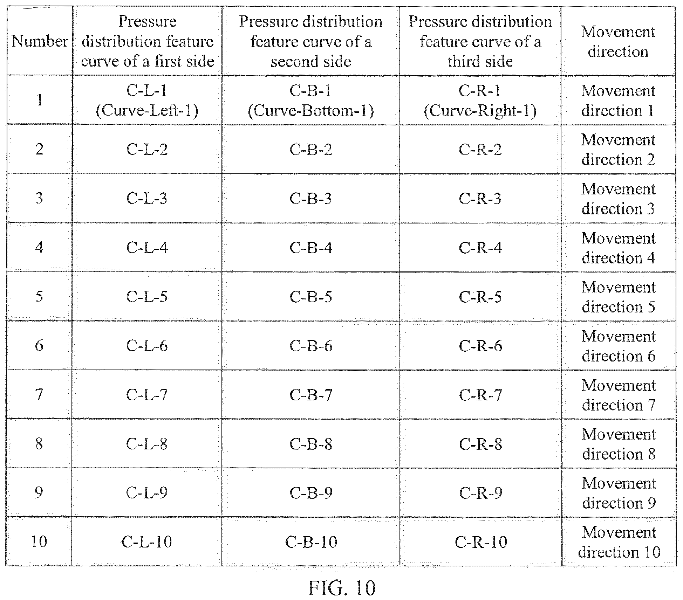

In an implementable manner, as shown in FIG. 10, after detecting at least one piece of inclination state data, the terminal correspondingly generates multiple pressure distribution features, draws a pressure distribution feature curve, and splits the pressure distribution feature curve into a pressure distribution feature curve of a first side, a pressure distribution feature curve of a second side, and a pressure distribution feature curve of a third side of the terminal, so as to subsequently compare a pressure distribution feature curve obtained on each side of the terminal with a pressure distribution feature curve of a corresponding side in a set. Subsequently, the terminal sets, according to entering by the user, a movement direction corresponding to the pressure distribution feature curve, and establishes a correspondence between the pressure distribution feature curve and the movement direction. Finally, the terminal generates a second set table according to at least one pressure distribution feature curve. For an implementation process of obtaining a pressure distribution feature, refer to FIG. 4 of the embodiments, which is not described in detail in this embodiment.

S310. Determine a range according to at least one acceleration.

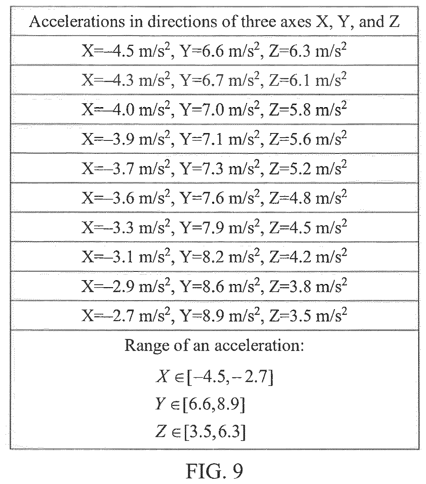

In a specific implementation, the terminal may detect at least one piece of inclination state data, obtain accelerations in the directions of the three axes X, Y, and Z, and determine, according to an acceleration in a preset direction, a range of the acceleration in the direction. For example, according to an inclination state data table shown in FIG. 9, after detecting multiple pieces of inclination state data, the terminal records an acceleration in each direction, and finally determines that a range of an acceleration in an X-axis direction is [-4.5, -2.7] m/s², a range of an acceleration in a Y-axis direction is [6.6, 8.9] m/s², and a range of an acceleration in a Z axis direction is [3.5, 6.3] m/s².

S320. Detect first inclination state data of the terminal, where the first inclination state data includes a first acceleration in a preset reference direction.

In a specific implementation, after determining the range of the acceleration in each direction, the terminal enables a function for detecting inclination state data. When the user holds the terminal with the right hand, the terminal detects current inclination state data, and therefore, obtains accelerations in the directions of the three axes X, Y, and Z.

Optionally, a condition for the detecting pressure that is applied on at least one side of the terminal is: the first acceleration falls within a preset range. After obtaining the accelerations in the directions of the three axes X, Y, and Z, the terminal determines whether the acceleration in the X-axis direction falls within [-4.5, -2.7] m/s², or whether the acceleration in the Y-axis direction falls within [6.6, 8.9] m/s², or whether the acceleration in the Z axis direction falls within [3.5, 6.3] m/s². If at least one of the foregoing conditions is met, step S330 is performed. If none of the foregoing conditions is met, detection is stopped, and a procedure is ended.

In an implementable manner, the terminal may enable, according to a setting of the user, the function for detecting inclination state data, or the terminal may enable, after being powered on, the function for detecting inclination state data.

S330. Detect the pressure that is applied on the at least one side of the terminal, to obtain a first pressure distribution feature.

In a specific implementation, after generating a first set table, the terminal may enable a detection function according to a setting of the user, or may enable a detection function after the terminal is powered on. When the user holds the terminal with the right hand, the pressure sensors on the three sides of the terminal detect respective pressure that the three sides are subject to, to generate a first pressure distribution feature, and draw a first pressure distribution feature curve.

S340. Compare the first pressure distribution feature with a pressure distribution feature in a pre-generated set, to obtain a second pressure distribution feature that matches the first pressure distribution feature.

In a specific implementation, after obtaining the first pressure distribution feature, the terminal draws the first pressure distribution feature curve, and splits the pressure distribution feature curve into a pressure distribution feature curve of the first side, a pressure distribution feature curve of the second side, and a pressure distribution feature curve of the third side of the terminal, and compare the pressure distribution feature curves with corresponding pressure distribution feature curves saved in the second set table. For example, as shown in FIG. 10, if the terminal finds that a pressure distribution feature curve that matches the first pressure distribution feature curve is pressure distribution feature curve number 5, the terminal determines that pressure distribution feature curve number 5 is a second pressure distribution feature curve.

In an implementable manner, a manner in which the terminal compares to determine whether pressure distribution feature curves match may be: calculating a similarity between the first pressure distribution feature curve and a pressure distribution feature curve already saved in the second set table, and determining whether the calculated similarity is greater than a preset threshold. Specifically, the terminal calculates a similarity between the first pressure distribution feature curve and pressure distribution feature curve number 5, and determines whether the similarity exceeds a threshold (for example, 90%). If the terminal determines that the similarity exceeds the threshold, the terminal determines that pressure distribution feature curve number 5 is the second pressure distribution feature curve. If the terminal determines that the similarity does not exceed the threshold, the terminal continues to calculate a similarity between the first pressure distribution feature curve and a next pressure distribution feature curve.

In an implementable manner, a manner in which the terminal compares to determine whether pressure distribution feature curves match may also be: comparing to determine whether each pressure value of the first pressure distribution feature curve falls within a preset range of a corresponding pressure value of a pressure distribution feature curve in the second set table. If a quantity of pressure values meeting the foregoing condition exceeds a preset quantity, the terminal may determine that a pressure distribution feature curve meeting the foregoing condition is the second pressure distribution feature curve.

S350. Determine, according to the preset correspondence between a pressure distribution feature and a movement direction, a movement direction corresponding to the second pressure distribution feature.

In a specific implementation, the second set table further stores a correspondence between a pressure distribution feature curve and a movement direction. The movement direction may be set according to entering by the user. Therefore, after it is determined that pressure distribution feature curve number 5 is the second pressure distribution feature curve, a movement direction corresponding to the second pressure distribution feature curve is obtained.

S360. Move the screen interface by a preset distance in the determined movement direction.

In a specific implementation, the terminal may move the screen interface by a preset distance along the movement direction, so that the thumb of the user can touch an area that cannot be touched by the thumb in a normal condition.

In an implementable manner, because an interface part that is moved outside a screen is hidden and invisible, the user may subsequently slide the screen interface as needed, so that the thumb of the user can touch all areas of the screen interface.

In an implementable manner, the movement direction may further be used to enable the terminal to scale up or scale down and move the screen interface along the movement direction according to a preset scale. After scaling up or scaling down the screen interface according to the preset scale, the terminal may move the scaled-up or scaled-down screen interface by the preset distance in the determined movement direction; or after moving the screen interface by the preset distance in the determined movement direction, the terminal scales up or scales down the moved screen interface according to the preset scale.

In an implementable manner, the terminal may maintain the moved screen interface for a preset time, and then restore the screen interface to a normal state; or wait for an instruction entered by the user, to restore the screen interface to a normal state, and continue to go back to step S320.

According to this embodiment of the present invention, a range of an acceleration in a preset reference direction may be established first, a set of pressure distribution features is established, and then first inclination state data of a terminal is detected. The first inclination state data includes a first acceleration in the preset reference direction; if the first acceleration falls within the preset range, pressure that is applied on at least one side of the terminal is further detected, to obtain a first pressure distribution feature; the first pressure distribution feature is compared with a pressure distribution feature in the set, to obtain a second pressure distribution feature that matches the first pressure distribution feature; a movement direction corresponding to the second pressure distribution feature is determined according to a preset correspondence between a pressure distribution feature and a movement direction; and a screen interface is moved by a preset distance in the determined movement direction. The screen interface is moved by the preset distance by detecting pressure that is applied on the terminal by a user with one hand, so that the user can touch all areas of the screen interface when the user uses the terminal with one hand. An operation process is simple and convenient.

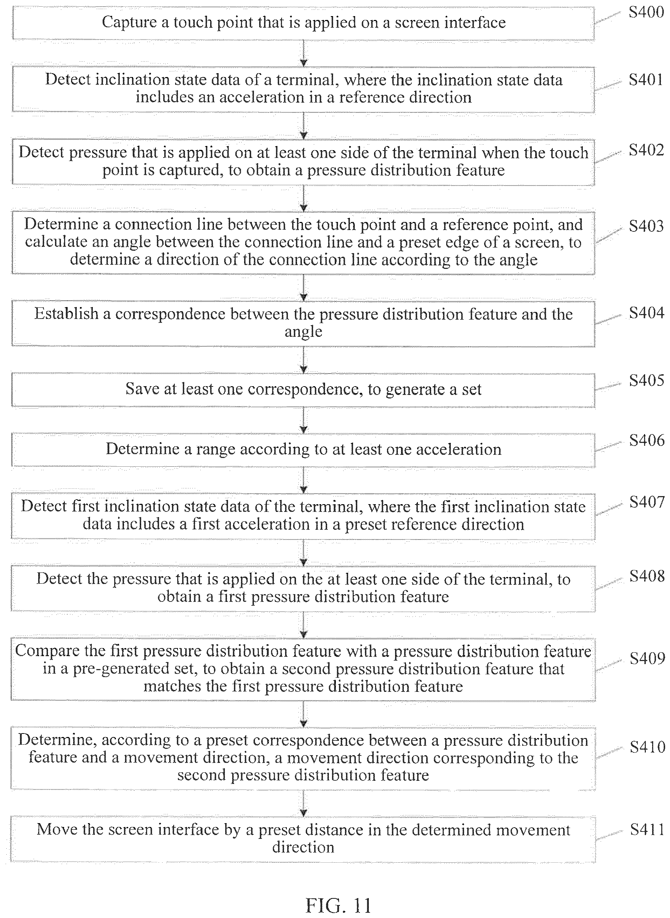

Referring to FIG. 11, FIG. 11 is a schematic flowchart of a fourth embodiment of a screen interface moving method according to an embodiment of the present invention. In this embodiment, FIG. 4 of the embodiments is combined with FIG. 8 of the embodiments. Current inclination state data of a terminal is detected, and a movement direction of a screen interface is a direction of a connection line from a touch point that is applied on a screen interface to a reference point. The reference point is a reference point preset on a preset edge of a screen. That is, the screen interface is moved according to the inclination state data, a pressure distribution feature curve, and an angle θ corresponding to the pressure distribution feature curve. The user may hold a mobile phone with the left hand or the right hand. In this embodiment, descriptions are provided by still using an example in which a user holds a mobile phone with the right hand. Detailed descriptions are provided below.

S400. Capture the touch point that is applied on the screen interface.

In a specific implementation, in an initial setting phase, the terminal needs to first collect at least one pressure distribution feature of the user as a reference object, establish a correspondence between a pressure distribution feature and a movement direction, and finally generate a set. When the terminal subsequently detects pressure applied by the user with the right hand, the terminal compares the pressure with the reference object in the set. Therefore, when the terminal collects these reference objects, the terminal needs to first obtain a touch point at which the thumb of the user taps the screen interface.

Optionally, a condition for the detecting pressure that is applied on at least one side of the terminal when the touch point is captured is: the touch point falls within a preset area.

In a specific implementation, as shown in FIG. 5, after capturing the touch point D1 that is applied on the screen interface, the terminal determines whether the touch point D1 falls within the preset area. If the touch point D1 falls within the preset area, the terminal performs step S401. If the touch point D1 falls outside the preset area, the touch point D1 captured this time is invalid, and the terminal prompts the user to recollect a touch point.

In an implementable manner, the terminal may preset the area. As shown in FIG. 5, the terminal may prompt the user to hold the terminal with the right hand, and to use the thumb to draw an arc, for example, an arc L1, on the screen interface, to set an area. After collecting the arc L1 that is applied on the screen interface, the terminal may set a width of an arc area according to a selection by the user. Finally, the terminal sets an arc L2 (the arc L2 shown in FIG. 5 may be set above the arc L1, and optionally, the arc L2 may be set below the arc L1) on a preset side of the arc L1 according to the specified width of the arc area, and an area between the arc L1 and the arc L2 is the area.

In an implementable manner, the arc L2 may also be entered by the user. When the terminal collects and determines the arc L1 that is applied on the screen interface, the terminal may prompt the user again to draw a second arc (the arc L2) on the screen interface. Therefore, the terminal determines the area according to the arc L1 and the arc L2 that are entered by the user.

In an implementable manner, the area may also be formed by a straight line, a broken line, or any curve, or a closed polygon may form the area, which is not limited in this embodiment.

S401. Detect inclination state data of the terminal, where the inclination state data includes an acceleration in a reference direction.

In a specific implementation, after capturing the touch point D1 that is applied on the screen interface, the terminal obtains current inclination state data of the terminal, including an acceleration in a preset reference direction. The reference direction may be directions of three axes X, Y, and Z. For example, the terminal may detect accelerations in the directions of the three axes X, Y, and Z by using a tri-axis accelerometer, and saves a value of an acceleration in each direction.

In an implementable manner, after detecting the current inclination state data, the terminal determines, according to a value of the acceleration in the preset reference direction, whether the terminal is inclined towards a third side. For example, the terminal determines whether a value of an acceleration in an X-axis direction is less than or equal to a preset threshold. If the terminal determines that the value of the acceleration in the X-axis direction is less than or equal to the preset threshold, it indicates that the terminals is inclined towards the third side, and step S402 is performed. If the terminal determines that the value of the acceleration in the X-axis direction is not less than or equal to the preset threshold, the procedure is ended.

S402. Detect pressure that is applied on at least one side of the terminal when the touch point is captured, to obtain a pressure distribution feature.

In a specific implementation, after the terminal obtains the current inclination state data, pressure sensors on a first side, pressure sensors on a second side, and pressure sensors on the third side of the terminal detect pressure that is applied on the first side terminal, the second side, and the third side pressure of the terminal, and obtain a pressure distribution feature.

In an implementable manner, as shown in FIG. 3a to FIG. 3c, at least one pressure sensor is distributed on each of the first side, the second side, and the third side of the terminal. For example, in FIG. 3a, pressure sensors L1 to L9 may be deployed on the first side of the terminal, pressure sensors B1 to B8 may be deployed on the second side of the terminal, and pressure sensors R1 to R9 may be deployed on the third side of the terminal. Therefore, after each pressure sensor detects pressure that is applied by all parts of the right hand of the user, the terminal obtains, according to pressure values detected by all the pressure sensors, a distribution feature of pressure tested by the user this time, to generate a pressure distribution feature curve shown in FIG. 6. A horizontal axis of the pressure distribution feature curve shown in FIG. 6 represents names of all the pressure sensors on the first side to the third side, and a vertical axis represents pressure values detected by all the pressure sensors. The pressure distribution feature curve is generated according to the pressure values detected by all the pressure sensors, and then the pressure distribution feature curve is filtered to remove burrs, to form a relatively smooth curve. As can be seen with reference to the pressure distribution feature curve in FIG. 6 and the schematic diagram showing that a terminal is subject to a force in FIG. 2, if the user uses the right hand and inclines the terminal entirely towards the third side, the terminal is mainly subject to pressure from the little finger and the part between the thumb and the index finger, and pressure values detected by the pressure sensors on the first side of the terminal are almost zero. The pressure sensors on the second side and the pressure sensors on the third side of the terminal can detect the applied pressure. In this case, the pressure distribution feature is mainly embodied on the second side and the third side of the terminal.

S403. Determine the connection line between the touch point and the reference point, and calculate an angle between the connection line and the preset edge of the screen, to determine a direction of the connection line according to the angle.

In a specific implementation, as shown in FIG. 5, a first edge of the screen is set to be a preset edge, and a reference point D2 is preset on the first edge of the screen. After capturing the touch point D1 that is applied on the screen interface, the terminal determines a connection line between the touch point D1 and the reference point D2, and calculates an angle between the connection line and the first edge of the screen. An angle θ between the touch point D1 and the first edge of the screen is calculated, and therefore, a direction of a connection line (that is, the connection line between the touch point D1 and the reference point D2) corresponding to the angle θ is determined, that is, a movement direction of the screen interface is determined.

In an implementable manner, an order of performing step S402 and step S403 is not limited.

S404. Establish a correspondence between the pressure distribution feature and the angle.

In a specific implementation, after the pressure distribution feature curve and the angle are obtained, a correspondence is established. In a first set table shown in FIG. 7, the pressure distribution feature curve is split into a pressure distribution feature curve of the first side, a pressure distribution feature curve of the second side, and a pressure distribution feature curve of the third side of the terminal, so as to subsequently compare a pressure distribution feature curve obtained on each side of the terminal with a pressure distribution feature curve of a corresponding side in the set. The pressure distribution feature curve of each of the three sides of the terminal corresponds to the angle calculated in step S403, that is, a correspondence between a pressure distribution feature curve and an angle is established.

S405. Store at least one correspondence, to generate the set.

In a specific implementation, after establishing the foregoing correspondence, the terminal repeats step S400 to step S404, collects at least once a touch point of entering by the user, detects current inclination state data of the terminal when the touch point is captured, obtains pressure that is applied on the first side to the third side of the terminal when the touch point is collected, and establishes a correspondence between a pressure distribution feature and an angle. After performing collection for a preset quantity of times, the terminal saves all correspondences, and finally generates a first set table, to provide a reference for a subsequently obtained pressure distribution feature.

In an implementable manner, pressure distribution feature curves with similar angles may be classified as one class. For example, a pressure distribution feature curve corresponding to an angle of 28°, a pressure distribution feature curve corresponding to an angle of 30°, and a pressure distribution feature curve corresponding to an angle of 32° may be aggregated, to be classified as pressure distribution feature curves corresponding to an angle of 30°. Then other pressure distribution feature curves are classified in a same manner.

S406. Determine a range according to at least one acceleration.

In a specific implementation, after establishing the first set table, the terminal obtains the accelerations in the directions of the three axes X, Y, and Z according to the inclination state data that is detected at least once by the terminal in step S405, and determines, according to an acceleration in a preset direction, a range of the acceleration in the direction. For example, according to an inclination state data table shown in FIG. 9, after detecting multiple pieces of inclination state data, the terminal records an acceleration in each direction, and finally determines that a range of an acceleration in an X-axis direction is [-4.5, -2.7] m/s², a range of an acceleration in a Y-axis direction is [6.6, 8.9] m/s², and a range of an acceleration in a Z axis direction is [3.5, 6.3] m/s².

It should be noted that step S400 to step S406 are a process of an initial phase for collecting a reference sample. Subsequent step S407 to step S411 are steps of actual detection after the terminal enables a detection function.

In an implementable manner, the terminal may enable, according to a setting of the user, a function for detecting inclination state data, or the terminal may enable, after being powered on, a function for detecting inclination state data.

S407. Detect first inclination state data of the terminal, where the first inclination state data includes a first acceleration in a preset reference direction.

In a specific implementation, after determining the range of the acceleration in each direction, the terminal enables the function for detecting inclination state data. When the user holds the terminal with the right hand, the terminal detects current inclination state data, and therefore, obtains accelerations in the directions of the three axes X, Y, and Z.

Optionally, a condition for the detecting pressure that is applied on at least one side of the terminal is: the first acceleration falls within a preset range. After obtaining the accelerations in the directions of the three axes X, Y, and Z, the terminal determines whether the acceleration in the X-axis direction falls within [-4.5, -2.7] m/s², or whether the acceleration in the Y-axis direction falls within [6.6, 8.9] m/s², or whether the acceleration in the Z axis direction falls within [3.5, 6.3] m/s². If at least one of the foregoing conditions is met, step S408 is performed. If none of the foregoing conditions is met, detection is stopped, and a procedure is ended.

S408. Detect the pressure that is applied on the at least one side of the terminal, to obtain a first pressure distribution feature.

In a specific implementation, when the user holds the terminal with the right hand, the pressure sensors on the three sides of the terminal detect respective pressure that the three sides are subject to, to generate a first pressure distribution feature, and draw a first pressure distribution feature curve.

S409. Compare the first pressure distribution feature with a pressure distribution feature in a pre-generated set, to obtain a second pressure distribution feature that matches the first pressure distribution feature.

In a specific implementation, the first pressure distribution feature curve is split into a pressure distribution feature curve of the first side, a pressure distribution feature curve of the second side, and a pressure distribution feature curve of the third side of the terminal, and the pressure distribution feature curves are respectively compared with pressure distribution feature curves of corresponding sides that are saved in the first set table of FIG. 7, to find a pressure distribution feature curve that matches the first pressure distribution feature curve. For example, after the pressure distribution feature curve of the first side, the pressure distribution feature curve of the second side, and the pressure distribution feature curve of the third side are respectively compared with the pressure distribution feature curves of the corresponding sides in the first set table, it is found that the pressure distribution feature curve that matches the first pressure distribution feature curve is pressure distribution feature curve number 5. Therefore, it is determined that pressure distribution feature curve number 5 is a second pressure distribution feature curve, and an angle corresponding to pressure distribution feature curve number 5 is 40°.

Optionally, step S409 may include step S4091 (not shown in the figure) and step S4092 (not shown in the figure).

S4091. Calculate a similarity between the first pressure distribution feature and a pressure distribution feature in the set.

In a specific implementation, a manner in which the terminal compares to determine whether pressure distribution feature curves match may be: calculating a similarity between the first pressure distribution feature curve and a pressure distribution feature curve already saved in the first set table, and determining whether the calculated similarity is greater than a preset threshold. Specifically, the terminal calculates a similarity between the first pressure distribution feature curve and pressure distribution feature curve number 5, and determines whether the similarity exceeds a threshold (for example, 90%). If the terminal determines that the similarity exceeds the threshold, the terminal determines that pressure distribution feature curve number 5 is the second pressure distribution feature curve. If the terminal determines that the similarity does not exceed the threshold, the terminal continues to calculate a similarity between the first pressure distribution feature curve and a next pressure distribution feature curve.

In an implementable manner, a manner in which the terminal compares to determine whether pressure distribution feature curves match may also be: comparing to determine whether each pressure value of the first pressure distribution feature curve falls within a preset range of a corresponding pressure value of a pressure distribution feature curve in the first set table. If a quantity of pressure values meeting the foregoing condition exceeds a preset quantity, the terminal may determine that a pressure distribution feature curve meeting the foregoing condition is the second pressure distribution feature curve, and determine an angle corresponding to the pressure distribution feature curve.

S4092. Determine that a pressure distribution feature with a similarity greater than or equal to a preset threshold is the second pressure distribution feature.

In a specific implementation, when the terminal determines that the similarity is greater than or equal to the preset threshold, the terminal determines that pressure distribution feature curve number 5 is the second pressure distribution feature curve, and obtains a corresponding angle of 40° according to a correspondence between pressure distribution feature curve number 5 and the angle.

S410. Determine, according to a preset correspondence between a pressure distribution feature and a movement direction, a movement direction corresponding to the second pressure distribution feature.

In a specific implementation, after obtaining the angle corresponding to pressure distribution feature curve number 5, the terminal determines that a movement direction is a direction of a connection line corresponding to the angle, that is, a movement direction of a corresponding connection line between the touch point D1 and the reference point D2 when the angle θ is 40°.

S411. Move the screen interface by a preset distance in the determined movement direction.

In a specific implementation, the terminal may move the screen interface by a preset distance along the movement direction, so that the thumb of the user can touch an area that cannot be touched by the thumb in a normal condition.

In an implementable manner, because an interface part that is moved outside a screen is hidden and invisible, the user may subsequently slide the screen interface as needed, so that the thumb of the user can touch all areas of the screen interface.

In an implementable manner, the movement direction may further be used to enable the terminal to scale up or scale down and move the screen interface along the movement direction according to a preset scale.

In an implementable manner, the terminal may maintain the moved screen interface for a preset time, and then restore the screen interface to a normal state; or wait for an instruction entered by the user, to restore the screen interface to a normal state, and continue to go back to step S407.

According to this embodiment of the present invention, a set of pressure distribution features may be established first, a range of an acceleration in a preset reference direction is established, and then first inclination state data of a terminal is detected. The first inclination state data includes a first acceleration in the preset reference direction; if the first acceleration falls within the preset range, pressure that is applied on at least one side of the terminal is further detected, to obtain a first pressure distribution feature; the first pressure distribution feature is compared with a pressure distribution feature in the set, to obtain a second pressure distribution feature that matches the first pressure distribution feature; an angle corresponding to the second pressure distribution feature is determined according to a preset correspondence between a pressure distribution feature and an angle; and a screen interface is moved by a preset distance in a direction of a connection line corresponding to the determined angle. The screen interface is moved by the preset distance by detecting pressure that is applied on the terminal by a user with one hand, so that the user can touch all areas of the screen interface when the user uses the terminal with one hand. An operation process is simple and convenient.

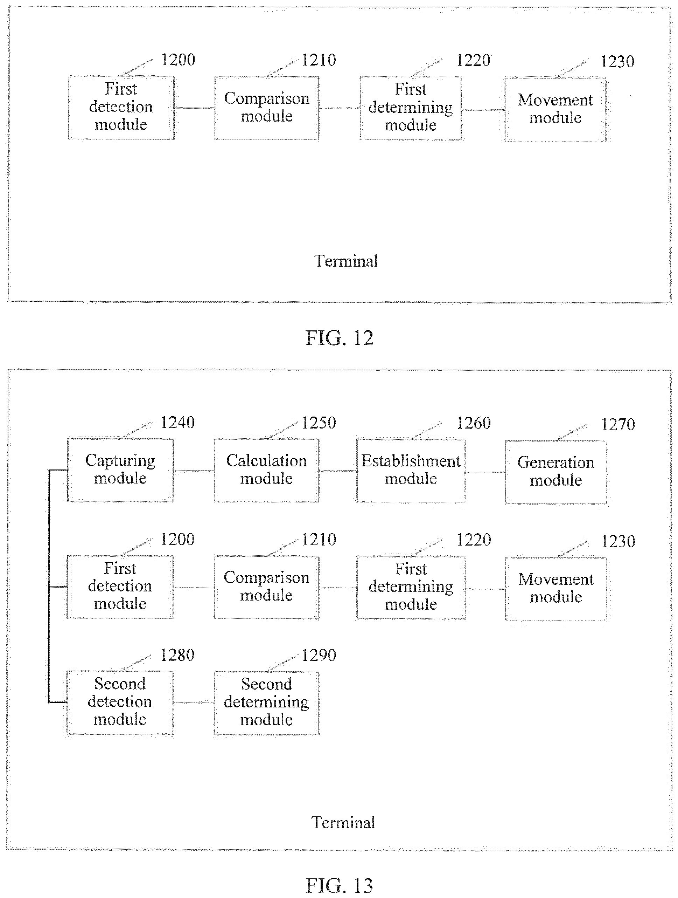

Referring to FIG. 12, FIG. 12 is a schematic structural diagram of a terminal according to an embodiment of the present invention. A terminal involved in the present invention may be any mobile or portable electronic device, including, but not limited to, an electronic device such as a mobile phone, a mobile computer, a tablet computer, a personal digital assistant, or a media player. In this embodiment, a piezoelectric sensor may be used to detect pressure that is applied on a terminal. A pressure sensor, also referred to as a piezoelectric sensor, is a sensor that is manufactured by using a piezoelectric effect that is generated after some dielectrics are subject to a force. The piezoelectric effect refers to a phenomenon in which an electric charge is generated on surfaces of some dielectrics because of a polarization phenomenon of an internal electric charge when the dielectrics are deformed under the action of an external force in a particular direction. In addition, the pressure sensor may also be a piezoelectric film sensor. The piezoelectric film sensor is very sensitive to dynamic stress, and therefore, can accurately detect pressure from different parts of a user hand. A user may hold a terminal with the left hand or the right hand. In this embodiment, descriptions are provided by using an example in which a user holds a mobile phone with the right hand. The terminal shown in FIG. 12 includes a first detection module 1200, a comparison module 1210, a first determining module 1220, and a movement module 1230.

The first detection module 1200 is configured to detect pressure that is applied on at least one side of a terminal, to obtain a first pressure distribution feature.

The comparison module 1210 is configured to compare the first pressure distribution feature obtained by the first detection module 1200 with a pressure distribution feature in a pre-generated set, to obtain a second pressure distribution feature that matches the first pressure distribution feature.

The first determining module 1220 is configured to determine, according to a preset correspondence between a pressure distribution feature and a movement direction, a movement direction corresponding to the second pressure distribution feature obtained by the comparison module 1210.

The movement module 1230 is configured to move a screen interface by a preset distance in the movement direction determined by the first determining module 1220.

In a specific implementation, as shown in FIG. 2, when a user holds a terminal with the right hand, the terminal may be subject to pressure from parts of the right hand such as a part between the thumb and the index finger, the little finger, the ring finger, and the middle finger. Therefore, as shown in FIG. 3a, FIG. 3b, and FIG. 3c, pressure sensors may be separately deployed on a first side, a second side, and a third side of the terminal. A quantity of the pressure sensors is not limited in this embodiment. Therefore, the first side of the terminal may include an area in which pressing by the middle finger and the ring finger is detected, the second side may include an area in which pressing by the little finger is detected, and the third side may include an area in which pressing by the part between the thumb and the index finger is detected. After detecting the pressure generated by holding by the user, the pressure sensors distributed on the first side, the second side, and the third side of the terminal generate a first pressure distribution feature according to pressure detected by each pressure sensor.

In a specific implementation, a set includes at least one pressure distribution feature that is generated when the user holds the terminal with the right hand. The terminal collects and saves the at least one pressure distribution feature in advance, to generate the set. After the first pressure distribution feature is generated according to the pressure detected by each pressure sensor, the first pressure distribution feature is compared with each saved pressure distribution feature in the set, and a second pressure distribution feature that matches the first pressure distribution feature is finally found from the set.

In a specific implementation, the set not only includes the at least one pressure distribution feature, but also includes a correspondence between a pressure distribution feature and a movement direction. After the second pressure distribution feature that matches the first pressure distribution feature is obtained in the foregoing step, a movement direction corresponding to the second pressure distribution feature is determined. The movement direction is a movement direction corresponding to the first pressure distribution feature. The movement direction is used to enable the terminal to move a screen interface in the movement direction. A movement direction corresponding to a pressure distribution feature may be an arbitrarily specified movement direction, or a movement direction that is calculated according to the pressure distribution feature and a preset rule, which is not limited in this embodiment.

In a specific implementation, the terminal may move the screen interface by a preset distance along the movement direction, so that the thumb of the user can touch an area that cannot be touched by the thumb in a normal condition.

In an implementable manner, because an interface part that is moved outside a screen is hidden and invisible, the user may subsequently slide the screen interface as needed, so that the thumb of the user can touch all areas of the screen interface.

In an implementable manner, the movement direction may further be used to enable the terminal to scale up or scale down and move the screen interface along the movement direction according to a preset scale. The movement module 1230 is further specifically configured to: after scaling up or scaling down the screen interface according to a preset scale, move the scaled-up or scaled-down screen interface by the preset distance in the movement direction determined by the first determining module; or after moving the screen interface by the preset distance in the movement direction determined by the first determining module, scale up or scale down the moved screen interface according to the preset scale.

In an implementable manner, the terminal may maintain the moved screen interface for a preset time, and then restore the screen interface to a normal state; or wait for an instruction entered by the user, to restore the screen interface to a normal state, and the first detection module 1200 continues to detect the pressure that is applied on the at least one side of the terminal.

Optionally, the movement direction is a direction of a connection line from a touch point that is applied on the screen interface to a reference point, and the reference point is a reference point preset on a preset edge of a screen. As shown in FIG. 13, the terminal further includes a capturing module 1240, a calculation module 1250, an establishment module 1260, and a generation module 1270.

The capturing module 1240 is configured to capture the touch point that is applied on the screen interface.

The first detection module 1200 is further configured to detect pressure that is applied on the at least one side of the terminal when the capturing module 1240 captures the touch point, to obtain the pressure distribution feature.

The calculation module 1250 is configured to: determine the connection line between the touch point captured by the capturing module 1240 and the reference point, and calculate an angle between the connection line and the preset edge of the screen, to determine the direction of the connection line according to the angle.

The establishment module 1260 is configured to establish a correspondence between the pressure distribution feature and the angle.

The generation module 1270 is configured to save at least one correspondence, to generate the set.

In a specific implementation, the terminal needs to first collect at least one pressure distribution feature of the user as a reference object, establish a correspondence between a pressure distribution feature and a movement direction, and finally generate a set. When the terminal subsequently detects pressure applied by the user with the right hand, the terminal compares the pressure with the reference object in the set. Therefore, when the terminal collects these reference objects, the terminal needs to first obtain a touch point at which the thumb of the user taps the screen interface.

Optionally, a condition for the detecting, by the first detection module 1200, the pressure that is applied on the at least one side of the terminal when the touch point is captured is: the touch point falls within a preset area.

In a specific implementation, after capturing the touch point that is applied on the screen interface, the terminal determines whether the touch point falls within the preset area. If the touch point falls within the preset area, the first detection module 1200 detects the pressure that is applied on the at least one side of the terminal when the capturing module 1240 captures the touch point. If the touch point falls outside the preset area, the touch point captured this time is invalid, and the terminal prompts the user to recollect a touch point.

In an implementable manner, the terminal may preset the area. As shown in FIG. 5, the terminal may prompt the user to hold the terminal with the right hand, and to use the thumb to draw an arc, for example, an arc L1, on the screen interface, to set an area. After collecting the arc L1 that is applied on the screen interface, the terminal may set a width of an arc area according to a selection by the user. Finally, the terminal sets an arc L2 (the arc L2 shown in FIG. 5 may be set above the arc L1, and optionally, the arc L2 may be set below the arc L1) on a preset side of the arc L1 according to the specified width of the arc area, and an area between the arc L1 and the arc L2 is the area.

In an implementable manner, the arc L2 may also be entered by the user. When the terminal collects and determines the arc L1 that is applied on the screen interface, the terminal may prompt the user again to draw a second arc (the arc L2) on the screen interface. Therefore, the terminal determines the area according to the arc L1 and the arc L2 that are entered by the user.

In an implementable manner, the area may also be formed by a straight line, a broken line, or any curve, or a closed polygon may form the area, which is not limited in this embodiment.

In a specific implementation, when the user uses the thumb to tap the screen interface, the right hand applies pressure on the terminal. As shown in FIG. 5, the terminal captures a touch point D1 that is applied on the screen interface, and determines whether the touch point D1 falls within the area. If the terminal determines that the touch point D1 falls within the area, as shown in FIG. 2, the terminal detects pressure that is applied on a first side, a second side, and a third side of the terminal, and obtains a pressure distribution feature.

In an implementable manner, as shown in FIG. 3a to FIG. 3c, at least one pressure sensor is distributed on each of the first side, the second side, and the third side of the terminal. For example, in FIG. 3a, pressure sensors L1 to L9 may be deployed on the first side of the terminal, pressure sensors B1 to B8 may be deployed on the second side of the terminal, and pressure sensors R1 to R9 may be deployed on the third side of the terminal. Therefore, after each pressure sensor detects pressure that is applied by all parts of the right hand of the user, the terminal obtains, according to pressure values detected by all the pressure sensors, a distribution feature of pressure tested by the user this time, to generate a pressure distribution feature curve shown in FIG. 6. A horizontal axis of the pressure distribution feature curve shown in FIG. 6 represents names of all the pressure sensors on the first side to the third side, and a vertical axis represents pressure values detected by all the pressure sensors. The pressure distribution feature curve is generated according to the pressure values detected by all the pressure sensors, and then the pressure distribution feature curve is filtered to remove burrs, to form a relatively smooth curve. As can be seen with reference to the pressure distribution feature curve in FIG. 6 and the schematic diagram showing that a terminal is subject to a force in FIG. 2, if the user uses the right hand and inclines the terminal entirely towards the third side, the terminal is mainly subject to pressure from the little finger and the part between the thumb and the index finger, and pressure values detected by the pressure sensors on the first side of the terminal are almost zero. The pressure sensors on the second side and the pressure sensors on the third side of the terminal can detect the applied pressure. In this case, the pressure distribution feature is mainly embodied on the second side and the third side of the terminal.

In a specific implementation, as shown in FIG. 5, a first edge of the screen is set to be a preset edge, and a reference point D2 is preset on the first edge of the screen. After capturing the touch point D1 that is applied on the screen interface, the terminal determines a connection line between the touch point D1 and the reference point D2, and calculates an angle between the connection line and the first edge of the screen. An angle θ between the touch point D1 and the first edge of the screen is calculated, and therefore, a direction of a connection line (that is, the connection line between the touch point D1 and the reference point D2) corresponding to the angle θ is determined, that is, a movement direction of the screen interface is determined.

In a specific implementation, after the pressure distribution feature curve and the angle are obtained, a correspondence is established. In a first set table shown in FIG. 7, the pressure distribution feature curve is split into a pressure distribution feature curve of the first side, a pressure distribution feature curve of the second side, and a pressure distribution feature curve of the third side of the terminal, so as to subsequently compare a pressure distribution feature curve obtained on each side of the terminal with a pressure distribution feature curve of a corresponding side in the set. The pressure distribution feature curve of each of the three sides of the terminal corresponds to the calculated angle, that is, a correspondence between a pressure distribution feature curve and an angle is established.

In a specific implementation, after the terminal establishes the foregoing correspondence, the capturing module 1240 collects at least once a touch point of entering by the user, the first detection module 1200 obtains at least once pressure that is applied on the first side to the third side of the terminal when the touch point is collected, and the establishment module 1260 establishes at least once a correspondence between a pressure distribution feature and an angle. After performing collection for a preset quantity of times, the terminal saves all correspondences, and finally generates the first set table, to provide a reference for a subsequently obtained pressure distribution feature.

In an implementable manner, pressure distribution feature curves with similar angles may be classified as one class. For example, a pressure distribution feature curve corresponding to an angle of 28°, a pressure distribution feature curve corresponding to an angle of 30°, and a pressure distribution feature curve corresponding to an angle of 32° may be aggregated, to be classified as pressure distribution feature curves corresponding to an angle of 30°. Then other pressure distribution feature curves are classified in a same manner.

Optionally, the comparison module 1210 includes a calculation unit 1211 (not shown in the figure) and a determining unit 1212 (not shown in the figure).

The calculation unit 1211 is configured to calculate a similarity between the first pressure distribution feature and a pressure distribution feature in the set.

The determining unit 1212 is configured to determine that a pressure distribution feature with a similarity greater than or equal to a preset threshold is the second pressure distribution feature.

In a specific implementation, a manner in which the terminal compares to determine whether pressure distribution feature curves match may be: calculating a similarity between the first pressure distribution feature curve and a pressure distribution feature curve already saved in the first set table, and determining whether the calculated similarity is greater than a preset threshold. Specifically, the calculation unit calculates the similarity between the first pressure distribution feature curve and pressure distribution feature curve number 5, and the determining unit determines whether the similarity exceeds a threshold (for example, 90%). If the determining unit determines that the similarity exceeds the threshold, the determining unit determines that pressure distribution feature curve number 5 is a second pressure distribution feature curve. If the determining unit determines that the similarity does not exceed the threshold, the determining unit continues to calculate a similarity between the first pressure distribution feature curve and a next pressure distribution feature curve.

In an implementable manner, a manner in which the terminal compares to determine whether pressure distribution feature curves match may also be: comparing to determine whether each pressure value of the first pressure distribution feature curve falls within a preset range of a corresponding pressure value of a pressure distribution feature curve in the first set table. If a quantity of pressure values meeting the foregoing condition exceeds a preset quantity, the determining unit may determine that a pressure distribution feature curve meeting the foregoing condition is the second pressure distribution feature curve, and determine an angle corresponding to the pressure distribution feature curve.

In a specific implementation, when the determining unit determines that the similarity is greater than the preset threshold, the determining unit determines that pressure distribution feature curve number 5 is the second pressure distribution feature curve, and obtains a corresponding angle of 40° according to a correspondence between pressure distribution feature curve number 5 and the angle.

Optionally, as shown in FIG. 13, the terminal further includes a second detection module 1280.

The second detection module 1280 is configured to detect first inclination state data of the terminal, and the first inclination state data includes a first acceleration in a preset reference direction.

In a specific implementation, after determining the range of the acceleration in each direction, the terminal enables a function for detecting inclination state data. When the user holds the terminal with the right hand, the terminal detects current inclination state data, and therefore, obtains accelerations in the directions of the three axes X, Y, and Z.

Optionally, a condition for the detecting, by the first detection module 1200, pressure that is applied on at least one side of the terminal is: the first acceleration falls within a preset range.

In a specific implementation, after obtaining the accelerations in the directions of the three axes X, Y, and Z, the terminal determines whether the acceleration in the X-axis direction falls within [-4.5, -2.7] m/s², or whether the acceleration in the Y-axis direction falls within [6.6, 8.9] m/s², or whether the acceleration in the Z axis direction falls within [3.5, 6.3] m/s². If at least one of the foregoing conditions is met, the first detection module 1200 detects the pressure that is applied on the at least one side of the terminal. If none of the foregoing conditions is met, the first detection module 1200 stops detection.

In an implementable manner, the terminal may enable, according to a setting of the user, the function for detecting inclination state data, or the terminal may enable, after being powered on, the function for detecting inclination state data.

Optionally, the second detection module 1280 is further configured to detect inclination state data of the terminal, and the inclination state data includes an acceleration in the reference direction.

Optionally, as shown in FIG. 13, the terminal further includes a second determining module 1290.

The second determining module 1290 is configured to determine the range according to at least one acceleration.

In a specific implementation, if the user uses the right hand and inclines the terminal entirely towards the third side, the terminal is mainly subject to pressure from the little finger and the part between the thumb and the index finger. Therefore, the terminal may further detect current inclination state data, including an acceleration in a preset reference direction. The reference direction may be directions of three axes X, Y, and Z. For example, the terminal may detect accelerations in the directions of the three axes X, Y, and Z by using a tri-axis accelerometer, and saves a value of an acceleration in each direction.

In an implementable manner, as shown in FIG. 10, after detecting at least one piece of inclination state data, the terminal correspondingly generates multiple pressure distribution features, draws a pressure distribution feature curve, and splits the pressure distribution feature curve into a pressure distribution feature curve of the first side, a pressure distribution feature curve of the second side, and a pressure distribution feature curve of the third side of the terminal, so as to subsequently compare a pressure distribution feature curve obtained on each side of the terminal with a pressure distribution feature curve of a corresponding side in the set. Subsequently, the terminal sets, according to entering by the user, a movement direction corresponding to the pressure distribution feature curve, and establishes a correspondence between the pressure distribution feature curve and the movement direction. Finally, the terminal generates a second set table according to at least one pressure distribution feature curve. For an implementation process of obtaining a pressure distribution feature, refer to FIG. 4 of the embodiments, which is not described in detail in this embodiment.

In a specific implementation, the terminal may detect at least one piece of inclination state data, obtain accelerations in the directions of the three axes X, Y, and Z, and determine, according to an acceleration in a preset direction, a range of the acceleration in the direction. For example, according to an inclination state data table shown in FIG. 9, after detecting multiple pieces of inclination state data, the terminal records an acceleration in each direction, and finally determines that a range of an acceleration in an X-axis direction is [-4.5, -2.7] m/s², a range of an acceleration in a Y-axis direction is [6.6, 8.9] m/s², and a range of an acceleration in a Z axis direction is [3.5, 6.3] m/s².

According to this embodiment of the present invention, a set of pressure distribution features may be established first, a range of an acceleration in a preset reference direction is established, and then first inclination state data of a terminal is detected. The first inclination state data includes a first acceleration in the preset reference direction; if the first acceleration falls within the preset range, pressure that is applied on at least one side of the terminal is further detected, to obtain a first pressure distribution feature; the first pressure distribution feature is compared with a pressure distribution feature in the set, to obtain a second pressure distribution feature that matches the first pressure distribution feature; an angle corresponding to the second pressure distribution feature is determined according to a preset correspondence between a pressure distribution feature and an angle; and a screen interface is moved by a preset distance in a direction of a connection line corresponding to the determined angle. The screen interface is moved by the preset distance by detecting pressure that is applied on the terminal by a user with one hand, so that the user can touch all areas of the screen interface when the user uses the terminal with one hand. An operation process is simple and convenient.

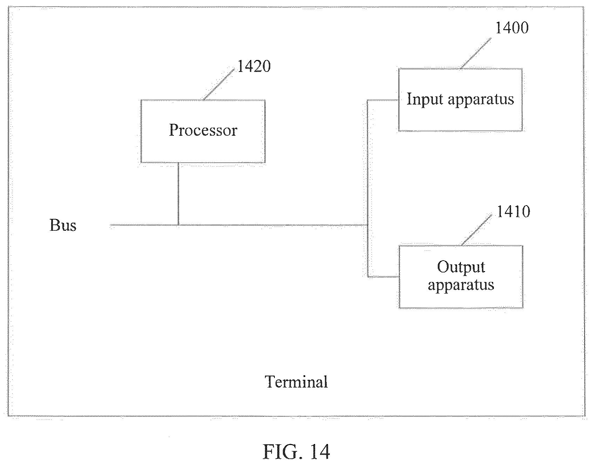

Referring to FIG. 14, FIG. 14 is a schematic structural diagram of a third embodiment of a terminal according to an embodiment of the present invention. The terminal shown in FIG. 14 includes an input apparatus 1400, an output apparatus 1410, and a processor 1420 (where the terminal may have one or more processors 1420, and in FIG. 14, one processor is used as an example). In this embodiment of the present invention, the input apparatus 1400, the output apparatus 1410, and the processor 1420 may be connected by using a bus or in another manner. In FIG. 14, a connection by using a bus is used as an example.

The input apparatus 1400 is configured to detect pressure that is applied on at least one side of the terminal, to obtain a first pressure distribution feature.

The processor 1420 is configured to compare the first pressure distribution feature obtained by the input apparatus 1400 with a pressure distribution feature in a pre-generated set, to obtain a second pressure distribution feature that matches the first pressure distribution feature.

The processor 1420 is further configured to determine, according to a preset correspondence between a pressure distribution feature and a movement direction, a movement direction corresponding to the second pressure distribution feature.

The output apparatus 1410 is configured to move a screen interface by a preset distance in the movement direction determined by the processor 1420.

In a specific implementation, as shown in FIG. 2, when a user holds a terminal with the right hand, the terminal may be subject to pressure from parts of the right hand such as a part between the thumb and the index finger, the little finger, the ring finger, and the middle finger. Therefore, as shown in FIG. 3a, FIG. 3b, and FIG. 3c, pressure sensors may be separately deployed on a first side, a second side, and a third side of the terminal. A quantity of the pressure sensors is not limited in this embodiment. Therefore, the first side of the terminal may include an area in which pressing by the middle finger and the ring finger is detected, the second side may include an area in which pressing by the little finger is detected, and the third side may include an area in which pressing by the part between the thumb and the index finger is detected. After detecting the pressure generated by holding by the user, the pressure sensors distributed on the first side, the second side, and the third side of the terminal generate a first pressure distribution feature according to pressure detected by each pressure sensor.

In a specific implementation, a set includes at least one pressure distribution feature that is generated when the user holds the terminal with the right hand. The terminal collects and saves the at least one pressure distribution feature in advance, to generate the set. After the first pressure distribution feature is generated according to the pressure detected by each pressure sensor, the first pressure distribution feature is compared with each saved pressure distribution feature in the set, and a second pressure distribution feature that matches the first pressure distribution feature is finally found from the set.

In a specific implementation, the set not only includes the at least one pressure distribution feature, but also includes a correspondence between a pressure distribution feature and a movement direction. After the second pressure distribution feature that matches the first pressure distribution feature is obtained in the foregoing step, a movement direction corresponding to the second pressure distribution feature is determined. The movement direction is a movement direction corresponding to the first pressure distribution feature. The movement direction is used to enable the terminal to move a screen interface in the movement direction. A movement direction corresponding to a pressure distribution feature may be an arbitrarily specified movement direction, or a movement direction that is calculated according to the pressure distribution feature and a preset rule, which is not limited in this embodiment.

In a specific implementation, the terminal may move the screen interface by a preset distance along the movement direction, so that the thumb of the user can touch an area that cannot be touched by the thumb in a normal condition.

In an implementable manner, because an interface part that is moved outside a screen is hidden and invisible, the user may subsequently slide the screen interface as needed, so that the thumb of the user can touch all areas of the screen interface.

In an implementable manner, the movement direction may further be used to enable the terminal to scale up or scale down and move the screen interface along the movement direction according to a preset scale.

In an implementable manner, the terminal may maintain the moved screen interface for a preset time, and then restore the screen interface to a normal state; or wait for an instruction entered by the user, to restore the screen interface to a normal state, and the input apparatus 1400 continues to detect the pressure that is applied on the at least one side of the terminal.

Optionally, the movement direction is a direction of a connection line from a touch point that is applied on the screen interface to a reference point, and the reference point is a reference point preset on a preset edge of a screen, and the input apparatus 1400 is further configured to capture the touch point that is applied on the screen interface.

The input apparatus 1400 is further configured to detect pressure that is applied on the at least one side of the terminal when the touch point is captured, to obtain the pressure distribution feature.

The processor 1420 is further configured to: determine the connection line between the touch point and the reference point, and calculate an angle between the connection line and the preset edge of the screen, to determine the direction of the connection line according to the angle.

The processor 1420 is further configured to establish a correspondence between the pressure distribution feature and the angle.

The processor 1420 is further configured to store at least one correspondence, to generate the set.

In a specific implementation, the terminal needs to first collect at least one pressure distribution feature of the user as a reference object, establish a correspondence between a pressure distribution feature and a movement direction, and finally generate a set. When the terminal subsequently detects pressure applied by the user with the right hand, the terminal compares the pressure with the reference object in the set. Therefore, when the terminal collects these reference objects, the terminal needs to first obtain a touch point at which the thumb of the user taps the screen interface.

Optionally, a condition for the detecting, by the input apparatus 1400, pressure that is applied on the at least one side of the terminal when the touch point is captured is: the touch point falls within a preset area.

In a specific implementation, after capturing the touch point that is applied on the screen interface, the terminal determines whether the touch point falls within the preset area. If the touch point falls within the preset area, the input apparatus 1400 detects the pressure that is applied on the at least one side of the terminal when the touch point is captured. If the touch point falls outside the preset area, the touch point captured this time is invalid, and the terminal prompts the user to recollect a touch point.

In an implementable manner, the terminal may preset the area. As shown in FIG. 5, the terminal may prompt the user to hold the terminal with the right hand, and to use the thumb to draw an arc, for example, an arc L1, on the screen interface, to set an area. After collecting the arc L1 that is applied on the screen interface, the terminal may set a width of an arc area according to a selection by the user. Finally, the terminal sets an arc L2 (the arc L2 shown in FIG. 5 may be set above the arc L1, and optionally, the arc L2 may be set below the arc L1) on a preset side of the arc L1 according to the specified width of the arc area, and an area between the arc L1 and the arc L2 is the area.

In an implementable manner, the arc L2 may also be entered by the user. When the terminal collects and determines the arc L1 that is applied on the screen interface, the terminal may prompt the user again to draw a second arc (the arc L2) on the screen interface. Therefore, the terminal determines the area according to the arc L1 and the arc L2 that are entered by the user.

In an implementable manner, the area may also be formed by a straight line, a broken line, or any curve, or a closed polygon may form the area, which is not limited in this embodiment.

In a specific implementation, when the user uses the thumb to tap the screen interface, the right hand applies pressure on the terminal. As shown in FIG. 5, the terminal captures a touch point D1 that is applied on the screen interface, and determines whether the touch point D1 falls within the area. If the terminal determines that the touch point D1 falls within the area, as shown in FIG. 2, the terminal detects pressure that is applied on a first side, a second side, and a third side of the terminal, and obtains a pressure distribution feature.

In an implementable manner, as shown in FIG. 3a to FIG. 3c, at least one pressure sensor is distributed on each of the first side, the second side, and the third side of the terminal. For example, in FIG. 3a, pressure sensors L1 to L9 may be deployed on the first side of the terminal, pressure sensors B1 to B8 may be deployed on the second side of the terminal, and pressure sensors R1 to R9 may be deployed on the third side of the terminal. Therefore, after each pressure sensor detects pressure that is applied by all parts of the right hand of the user, the terminal obtains, according to pressure values detected by all the pressure sensors, a distribution feature of pressure tested by the user this time, to generate a pressure distribution feature curve shown in FIG. 6. A horizontal axis of the pressure distribution feature curve shown in FIG. 6 represents names of all the pressure sensors on the first side to the third side, and a vertical axis represents pressure values detected by all the pressure sensors. The pressure distribution feature curve is generated according to the pressure values detected by all the pressure sensors, and then the pressure distribution feature curve is filtered to remove burrs, to form a relatively smooth curve. As can be seen with reference to the pressure distribution feature curve in FIG. 6 and the schematic diagram showing that a terminal is subject to a force in FIG. 2, if the user uses the right hand and inclines the terminal entirely towards the third side, the terminal is mainly subject to pressure from the little finger and the part between the thumb and the index finger, and pressure values detected by the pressure sensors on the first side of the terminal are almost zero. The pressure sensors on the second side and the pressure sensors on the third side of the terminal can detect the applied pressure. In this case, the pressure distribution feature is mainly embodied on the second side and the third side of the terminal.

In a specific implementation, as shown in FIG. 5, a first edge of the screen is set to be a preset edge, and a reference point D2 is preset on the first edge of the screen. After capturing the touch point D1 that is applied on the screen interface, the terminal determines a connection line between the touch point D1 and the reference point D2, and calculates an angle between the connection line and the first edge of the screen. An angle θ between the touch point D1 and the first edge of the screen is calculated, and therefore, a direction of a connection line (that is, the connection line between the touch point D1 and the reference point D2) corresponding to the angle θ is determined, that is, a movement direction of the screen interface is determined.

In a specific implementation, after the pressure distribution feature curve and the angle are obtained, a correspondence is established. In a first set table shown in FIG. 7, the pressure distribution feature curve is split into a pressure distribution feature curve of the first side, a pressure distribution feature curve of the second side, and a pressure distribution feature curve of the third side of the terminal, so as to subsequently compare a pressure distribution feature curve obtained on each side of the terminal with a pressure distribution feature curve of a corresponding side in the set. The pressure distribution feature curve of each of the three sides of the terminal corresponds to the calculated angle, that is, a correspondence between a pressure distribution feature curve and an angle is established.

In a specific implementation, after the terminal establishes the foregoing correspondence, the input apparatus 1400 collects at least once a touch point of entering by the user, and obtains at least once pressure that is applied on the first side to the third side of the terminal when the touch point is collected, and the processor 1420 establishes at least once a correspondence between a pressure distribution feature and an angle. After performing collection for a preset quantity of times, the terminal saves all correspondences, and finally generates the first set table, to provide a reference for a subsequently obtained pressure distribution feature.

In an implementable manner, pressure distribution feature curves with similar angles may be classified as one class. For example, a pressure distribution feature curve corresponding to an angle of 28°, a pressure distribution feature curve corresponding to an angle of 30°, and a pressure distribution feature curve corresponding to an angle of 32° may be aggregated, to be classified as pressure distribution feature curves corresponding to an angle of 30°. Then other pressure distribution feature curves are classified in a same manner.

Optionally, for the comparing, by the processor 1420, the first pressure distribution feature with a pressure distribution feature in a pre-generated set, to obtain a second pressure distribution feature that matches the first pressure distribution feature, the following steps are performed:
calculating a similarity between the first pressure distribution feature and a pressure distribution feature in the set; and
determining that a pressure distribution feature with a similarity greater than or equal to a preset threshold is the second pressure distribution feature.

In a specific implementation, a manner in which the terminal compares to determine whether pressure distribution feature curves match may be: calculating a similarity between the first pressure distribution feature curve and a pressure distribution feature curve already saved in the first set table, and determining whether the calculated similarity is greater than a preset threshold. Specifically, a calculation unit calculates the similarity between the first pressure distribution feature curve and pressure distribution feature curve number 5, and a determining unit determines whether the similarity exceeds a threshold (for example, 90%). If the determining unit determines that the similarity exceeds the threshold, the determining unit determines that pressure distribution feature curve number 5 is a second pressure distribution feature curve. If the determining unit determines that the similarity does not exceed the threshold, the determining unit continues to calculate a similarity between the first pressure distribution feature curve and a next pressure distribution feature curve.

In an implementable manner, a manner in which the terminal compares to determine whether pressure distribution feature curves match may further be: comparing to determine whether each pressure value of the first pressure distribution feature curve falls within a preset range of a corresponding pressure value of a pressure distribution feature curve in the first set table. If a quantity of pressure values meeting the foregoing condition exceeds a preset quantity, the determining unit may determine that a pressure distribution feature curve meeting the foregoing condition is the second pressure distribution feature curve, and determine an angle corresponding to the pressure distribution feature curve.

In a specific implementation, when the determining unit determines that the similarity is greater than the preset threshold, the determining unit determines that pressure distribution feature curve number 5 is the second pressure distribution feature curve, and obtains a corresponding angle of 40° according to a correspondence between pressure distribution feature curve number 5 and the angle.

Optionally, the input apparatus 1400 is further configured to detect first inclination state data of the terminal, and the first inclination state data includes a first acceleration in a preset reference direction.

A condition for the detecting, by the input apparatus 1400, pressure that is applied on at least one side of the terminal is: the first acceleration falls within a preset range.

In a specific implementation, after determining the range of the acceleration in each direction, the terminal enables a function for detecting inclination state data. When the user holds the terminal with the right hand, the terminal detects current inclination state data, and therefore, obtains accelerations in the directions of the three axes X, Y, and Z.

In a specific implementation, after obtaining the accelerations in the directions of the three axes X, Y, and Z, the terminal determines whether the acceleration in the X-axis direction falls within [-4.5, -2.7] m/s², or whether the acceleration in the Y-axis direction falls within [6.6, 8.9] m/s², or whether the acceleration in the Z axis direction falls within [3.5, 6.3] m/s². If at least one of the foregoing conditions is met, the input apparatus 1400 detects the pressure that is applied on the at least one side of the terminal. If none of the foregoing conditions is met, the input apparatus 1400 stops detection.

In an implementable manner, the terminal may enable, according to a setting of the user, the function for detecting inclination state data, or the terminal may enable, after being powered on, the function for detecting inclination state data.

Optionally, the input apparatus 1400 is further configured to detect inclination state data of the terminal, and the inclination state data includes an acceleration in the reference direction.

The processor 1420 is further configured to determine the range according to at least one acceleration.

In a specific implementation, if the user uses the right hand and inclines the terminal entirely towards the third side, the terminal is mainly subject to pressure from the little finger and the part between the thumb and the index finger. Therefore, the terminal may further detect current inclination state data, including an acceleration in a preset reference direction. The reference direction may be directions of three axes X, Y, and Z. For example, the terminal may detect accelerations in the directions of the three axes X, Y, and Z by using a tri-axis accelerometer, and saves a value of an acceleration in each direction.

In an implementable manner, as shown in FIG. 10, after detecting at least one piece of inclination state data, the terminal correspondingly generates multiple pressure distribution features, draws a pressure distribution feature curve, and splits the pressure distribution feature curve into a pressure distribution feature curve of the first side, a pressure distribution feature curve of the second side, and a pressure distribution feature curve of the third side of the terminal, so as to subsequently compare a pressure distribution feature curve obtained on each side of the terminal with a pressure distribution feature curve of a corresponding side in the set. Subsequently, the terminal sets, according to entering by the user, a movement direction corresponding to the pressure distribution feature curve, and establishes a correspondence between the pressure distribution feature curve and the movement direction. Finally, the terminal generates a second set table according to at least one pressure distribution feature curve. For an implementation process of obtaining a pressure distribution feature, refer to FIG. 4 of the embodiments, which is not described in detail in this embodiment.

In a specific implementation, the terminal may detect at least one piece of inclination state data, obtain accelerations in the directions of the three axes X, Y, and Z, and determine, according to an acceleration in a preset direction, a range of the acceleration in the direction. For example, according to an inclination state data table shown in FIG. 9, after detecting multiple pieces of inclination state data, the terminal records an acceleration in each direction, and finally determines that a range of an acceleration in an X-axis direction is [-4.5, -2.7] m/s², a range of an acceleration in a Y-axis direction is [6.6, 8.9] m/s², and a range of an acceleration in a Z axis direction is [3.5, 6.3] m/s².

Optionally, for the moving, by the output apparatus 1410, a screen interface by a preset distance in the movement direction determined by the processor, the following steps are performed:
after scaling up or scaling down the screen interface according to a preset scale, moving the scaled-up or scaled-down screen interface by the preset distance in the determined movement direction; or after moving the screen interface by the preset distance in the determined movement direction, scaling up or scaling down the moved screen interface according to the preset scale.

According to this embodiment of the present invention, a set of pressure distribution features may be established first, a range of an acceleration in a preset reference direction is established, and then first inclination state data of a terminal is detected. The first inclination state data includes a first acceleration in the preset reference direction; if the first acceleration falls within the preset range, pressure that is applied on at least one side of the terminal is further detected, to obtain a first pressure distribution feature; the first pressure distribution feature is compared with a pressure distribution feature in the set, to obtain a second pressure distribution feature that matches the first pressure distribution feature; an angle corresponding to the second pressure distribution feature is determined according to a preset correspondence between a pressure distribution feature and an angle; and a screen interface is moved by a preset distance in a direction of a connection line corresponding to the determined angle. The screen interface is moved by the preset distance by detecting pressure that is applied on the terminal by a user with one hand, so that the user can touch all areas of the screen interface when the user uses the terminal with one hand. An operation process is simple and convenient.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in a definition of a medium to which they belong. For example, a disk and disc used by the present invention includes a compact disc (CD), a laser disc, an optical disc, a digital versatile disc (DVD), a floppy disk and a Blu-ray disc. The disk generally copies data by a magnetic means, and the disc copies data optically by a laser means. The foregoing combination should also be included in the protection scope of the computer-readable medium.

What is disclosed above is merely exemplary embodiments of the present invention, and certainly is not intended to limit the protection scope of the present invention. Therefore, equivalent variations made in accordance with the claims of the present invention shall fall within the scope of the present invention.

## Claims

1. A screen interface moving method, comprising:
detecting (S100, S250, S330) pressure that is applied on at least one side of a terminal by a user holding the terminal with one hand, to obtain a first pressure distribution feature;
comparing (S110, S260, S340) the first pressure distribution feature with a pressure distribution feature in a pre-generated set, to obtain a second pressure distribution feature that matches the first pressure distribution feature;
determining (S120, S270, S350), according to a preset correspondence between a pressure distribution feature and a movement direction, a movement direction corresponding to the second pressure distribution feature; and
moving (S130, S280, S360) a screen interface by a preset distance in the determined movement direction,
**characterized in that**
the movement direction is a direction of a connection line from a touch point that is applied on the screen interface to a reference point, and the reference point is a reference point preset on a preset edge of a screen, and before the detecting (S100, S250) pressure that is applied on at least one side of a terminal, the method further comprises:
capturing (S200) the touch point that is applied on the screen interface;
detecting (S210) pressure that is applied on the at least one side of the terminal when the touch point is captured, to obtain the pressure distribution feature;
determining (S220) the connection line between the touch point and the reference point, and calculating an angle between the connection line and the preset edge of the screen, to determine the direction of the connection line according to the angle;
establishing (S230) a correspondence between the pressure distribution feature and the angle; and
saving (S240) at least one correspondence, to generate the set,
wherein a condition for the step of detecting pressure that is applied on the at least one side of the terminal when the touch point is captured is: the touch point falls within a preset area.

2. The method according to claim 1, wherein the comparing (S110, S260) the first pressure distribution feature with the pressure distribution feature in the pre-generated set, to obtain the second pressure distribution feature that matches the first pressure distribution feature specifically comprises:
calculating (S261) a similarity between the first pressure distribution feature and a pressure distribution feature in the set; and
determining (S262) that a pressure distribution feature with a similarity greater than or equal to a preset threshold is the second pressure distribution feature.

3. The method according to claim 1, wherein before the detecting (S100, S330) pressure that is applied on at least one side of a terminal, the method further comprises:
detecting (S320) first inclination state data of the terminal, wherein the first inclination state data comprises a first acceleration in a preset reference direction; and
a condition for the detecting pressure that is applied on at least one side of a terminal is: the first acceleration falls within a preset range.

4. The method according to claim 3, wherein before the detecting (S320) first inclination state data of the terminal, the method further comprises:
detecting (S300) inclination state data of the terminal, wherein the inclination state data comprises an acceleration in the reference direction; and
determining (S310) the range according to at least one acceleration.

5. The method according to claim 1, wherein the moving the screen interface by the preset distance in the determined movement direction specifically comprises:
after scaling up or scaling down the screen interface according to a preset scale, moving the scaled-up or scaled-down screen interface by the preset distance in the determined movement direction; or
after moving the screen interface by the preset distance in the determined movement direction, scaling up or scaling down the moved screen interface according to the preset scale.

6. A terminal, comprising:
a first detection module (1200), configured to detect pressure that is applied on at least one side of a terminal by a user holding the terminal with one hand, to obtain a first pressure distribution feature;
a comparison module (1210), configured to compare the first pressure distribution feature obtained by the first detection module with a pressure distribution feature in a pre-generated set, to obtain a second pressure distribution feature that matches the first pressure distribution feature;
a first determining module (1220), configured to determine, according to a preset correspondence between a pressure distribution feature and a movement direction, a movement direction corresponding to the second pressure distribution feature obtained by the comparison module; and
a movement module (1230), configured to move a screen interface by a preset distance in the movement direction determined by the first determining module,
**characterized in that**
the movement direction is a direction of a connection line from a touch point that is applied on the screen interface to a reference point, and the reference point is a reference point preset on a preset edge of a screen, and the terminal further comprises:
a capturing module (1240), configured to capture the touch point that is applied on the screen interface, wherein
the first detection module (1200) is further configured to detect pressure that is applied on the at least one side of the terminal when the capturing module captures the touch point, to obtain the pressure distribution feature;
a calculation module (1250), configured to: determine the connection line between the touch point captured by the capturing module and the reference point, and calculate an angle between the connection line and the preset edge of the screen, to determine the direction of the connection line according to the angle;
an establishment module (1260), configured to establish a correspondence between the pressure distribution feature and the angle; and
a generation module (1270), configured to save at least one correspondence, to generate the set,
wherein a condition for the detecting, by the first detection module (1200), pressure that is applied on the at least one side of the terminal when the touch point is captured is: the touch point falls within a preset area.

7. The terminal according to claim 6, wherein the comparison module (1210) comprises:
a calculation unit, configured to calculate a similarity between the first pressure distribution feature and a pressure distribution feature in the set; and
a determining unit, configured to determine that a pressure distribution feature with a similarity greater than or equal to a preset threshold is the second pressure distribution feature.

8. The terminal according to claim 6, wherein the terminal further comprises:
a second detection module (1280), configured to detect first inclination state data of the terminal, wherein the first inclination state data comprises a first acceleration in a preset reference direction; and
a condition for the detecting, by the first detection module (1200), pressure that is applied on at least one side of a terminal is: the first acceleration falls within a preset range.

9. The terminal according to claim 8, wherein
the second detection module (1280) is further configured to detect inclination state data of the terminal, wherein the inclination state data comprises an acceleration in the reference direction; and
the terminal further comprises:
a second determining module (1290), configured to determine the range according to at least one acceleration.

10. The terminal according to claim 6, wherein the movement module (S1230) is further specifically configured to:
after scaling up or scaling down the screen interface according to a preset scale, move the scaled-up or scaled-down screen interface by the preset distance in the movement direction determined by the first determining module; or
after moving the screen interface by the preset distance in the movement direction determined by the first determining module, scale up or scale down the moved screen interface according to the preset scale.

## Patentansprüche

1. Verfahren zum Bewegen einer Anzeigeschnittstelle, umfassend:
Detektieren (S100, S250, S330) eines Drucks, der auf mindestens eine Seite eines Endgeräts von einem Benutzer ausgeübt wird, welcher das Endgerät mit einer Hand hält, um ein erstes Druckverteilungsmerkmal zu erhalten;
Vergleichen (S110, S260, S340) des ersten Druckverteilungsmerkmals mit einem Druckverteilungsmerkmal in einem vorgenerierten Satz, um ein zweites Druckverteilungsmerkmal zu erhalten, das mit dem ersten Druckverteilungsmerkmal übereinstimmt;
Bestimmen (S120, S270, S350), gemäß einer voreingestellten Entsprechung zwischen einem Druckverteilungsmerkmal und einer Bewegungsrichtung, einer Bewegungsrichtung, die dem zweiten Druckverteilungsmerkmal entspricht; und
Bewegen (S130, S280, S360) einer Anzeigeschnittstelle um eine voreingestellte Distanz in der bestimmten Bewegungsrichtung;
**dadurch gekennzeichnet, dass**
die Bewegungsrichtung eine Richtung einer Verbindungslinie von einem Berührungspunkt, der auf der Anzeigeschnittstelle berührt wird, zu einem Referenzpunkt ist, und der Referenzpunkt ein voreingestellter Referenzpunkt auf einem voreingestellten Rand einer Anzeige ist, und, vor dem Detektieren (S100, S250) eines Drucks, der auf mindestens eine Seite eines Endgeräts ausgeübt wird, das Verfahren ferner umfasst:
Erfassen (S200) des Berührungspunkts, der auf der Anzeigeschnittstelle berührt wird; Detektieren (S210) eines Drucks, der auf die mindestens eine Seite des Endgeräts ausgeübt wird, wenn der Berührungspunkt erfasst wird, um das Druckverteilungsmerkmal zu erhalten;
Bestimmen (S220) der Verbindungslinie zwischen dem Berührungspunkt und dem Referenzpunkt, und Berechnen eines Winkels zwischen der Verbindungslinie und dem voreingestellten Rand der Anzeige, um die Richtung der Verbindungslinie gemäß dem Winkel zu bestimmen;
Herstellen (S230) einer Entsprechung zwischen dem Druckverteilungsmerkmal und dem Winkel; und
Sichern (S240) mindestens einer Entsprechung, um den Satz zu generieren;
wobei eine Bedingung für den Schritt des Detektierens eines Drucks, der auf die mindestens eine Seite des Endgeräts ausgeübt wird, wenn der Berührungspunkt erfasst wird, ist: der Berührungspunkt fällt in ein voreingestelltes Feld.

2. Verfahren nach Anspruch 1,
wobei das Vergleichen (S110, S260) des ersten Druckverteilungsmerkmals mit dem Druckverteilungsmerkmal in dem vorgenerierten Satz, um das zweite Druckverteilungsmerkmal zu erhalten, das mit dem ersten Druckverteilungsmerkmal übereinstimmt, spezifisch umfasst:
Berechnen (S261) einer Ähnlichkeit zwischen dem ersten Druckverteilungsmerkmal und einem Druckverteilungsmerkmal in dem Satz; und
Bestimmen (S262), dass ein Druckverteilungsmerkmal mit einer Ähnlichkeit größer oder gleich einer voreingestellten Schwelle das zweite Druckverteilungsmerkmal ist.

3. Verfahren nach Anspruch 1,
wobei, vor dem Detektieren (S100, S330) eines Drucks, der auf mindestens eine Seite eines Endgeräts ausgeübt wird, das Verfahren ferner umfasst:
Detektieren (S320) erster Neigungszustandsdaten des Endgeräts, wobei die ersten Neigungszustandsdaten eine erste Beschleunigung in einer voreingestellten Referenzrichtung umfassen; und
wobei eine Bedingung für das Detektieren eines Drucks, der auf mindestens eine Seite eines Endgeräts ausgeübt wird, ist: die Beschleunigung fällt in einen voreingestellten Bereich.

4. Verfahren nach Anspruch 3,
wobei, vor dem Detektieren (S320) erster Neigungszustandsdaten des Endgeräts, das Verfahren ferner umfasst:
Detektieren (S300) von Neigungszustandsdaten des Endgeräts, wobei die Neigungszustandsdaten eine Beschleunigung in der Referenzrichtung umfassen; und
Bestimmen (S310) des Bereichs gemäß mindestens einer Beschleunigung.

5. Verfahren nach Anspruch 1,
wobei das Bewegen der Anzeigeschnittstelle um die voreingestellte Distanz in der bestimmten Bewegungsrichtung spezifisch umfasst:
nach dem Vergrößern oder Verkleinern der Anzeigeschnittstelle gemäß einem voreingestellten Maßstab, Bewegen der vergrößerten oder verkleinerten Anzeigeschnittstelle um die voreingestellte Distanz in der bestimmten Bewegungsrichtung; oder
nach dem Bewegen der Anzeigeschnittstelle um die voreingestellte Distanz in der bestimmten Bewegungsrichtung, Vergrößern oder Verkleinern der bewegten Anzeigeschnittstelle gemäß dem voreingestellten Maßstab.

6. Endgerät, umfassend:
ein erstes Detektionsmodul (1200), das ausgelegt ist, einen Druck, der auf mindestens eine Seite eines Endgeräts von einem Benutzer ausgeübt wird, welcher das Endgerät mit einer Hand hält, zu detektieren, um ein erstes Druckverteilungsmerkmal zu erhalten;
ein Vergleichsmodul (1210), welches ausgelegt ist, das erste Druckverteilungsmerkmal, das von dem ersten Detektionsmodul erhalten wird, mit einem Druckverteilungsmerkmal in einem vorgenerierten Satz zu vergleichen, um ein zweites Druckverteilungsmerkmal zu erhalten, das mit dem ersten Druckverteilungsmerkmal übereinstimmt;
ein erstes Bestimmungsmodul (1220), das ausgelegt ist, gemäß einer voreingestellten Entsprechung zwischen einem Druckverteilungsmerkmal und einer Bewegungsrichtung, eine Bewegungsrichtung zu bestimmen, die dem zweiten Druckverteilungsmerkmal entspricht, das von dem Vergleichsmodul erhalten wird; und
ein Bewegungsmodul (1230), das ausgelegt ist, eine Anzeigeschnittstelle um eine voreingestellte Distanz in der Bewegungsrichtung zu bewegen, die von dem ersten Bestimmungsmodul bestimmt wird;
**dadurch gekennzeichnet, dass**
die Bewegungsrichtung eine Richtung einer Verbindungslinie von einem Berührungspunkt, der auf der Anzeigeschnittstelle berührt wird, zu einem Referenzpunkt ist, und der Referenzpunkt ein voreingestellter Referenzpunkt auf einem voreingestellten Rand einer Anzeige ist, und das Endgerät ferner umfasst:
ein Erfassungsmodul (1240), das ausgelegt ist, den Berührungspunkt, der auf der Anzeigeschnittstelle berührt wird, zu erfassen;
wobei das erste Detektionsmodul (1200) ferner ausgelegt ist, einen Druck, der auf die mindestens eine Seite des Endgeräts ausgeübt wird, zu detektieren, wenn das Erfassungsmodul den Berührungspunkt erfasst, um das Druckverteilungsmerkmal zu erhalten;
ein Berechnungsmodul (1250), das ausgelegt ist: die Verbindungslinie zwischen dem Berührungspunkt, der von dem Erfassungsmodul erfasst wird, und dem Referenzpunkt zu bestimmen, und einen Winkel zwischen der Verbindungslinie und dem voreingestellten Rand der Anzeige zu berechnen, um die Richtung der Verbindungslinie gemäß dem Winkel zu bestimmen;
ein Herstellungsmodul (1260), das ausgelegt ist, eine Entsprechung zwischen dem Druckverteilungsmerkmal und dem Winkel herzustellen; und
ein Generierungsmodul (1270), das ausgelegt ist, mindestens eine Entsprechung zu sichern, um den Satz zu generieren;
wobei eine Bedingung für das Detektieren, durch das erste Detektionsmodul (1200), eines Drucks, der auf die mindestens eine Seite des Endgeräts ausgeübt wird, wenn der Berührungspunkt erfasst wird, ist: der Berührungspunkt fällt in ein voreingestelltes Feld.

7. Endgerät nach Anspruch 6,
wobei das Vergleichsmodul (1210) umfasst:
eine Berechnungseinheit, die ausgelegt ist, eine Ähnlichkeit zwischen dem ersten Druckverteilungsmerkmal und einem Druckverteilungsmerkmal in dem Satz zu berechnen; und
eine Bestimmungseinheit, die ausgelegt ist zu bestimmen, dass ein Druckverteilungsmerkmal mit einer Ähnlichkeit größer oder gleich einer voreingestellten Schwelle das zweite Druckverteilungsmerkmal ist.

8. Endgerät nach Anspruch 6,
wobei das Endgerät ferner umfasst:
ein zweites Detektionsmodul (1280), das ausgelegt ist, erste Neigungszustandsdaten des Endgeräts zu detektieren, wobei die ersten Neigungszustandsdaten eine erste Beschleunigung in einer voreingestellten Referenzrichtung umfassen; und
wobei eine Bedingung für das Detektieren, durch das erste Detektionsmodul (1200), eines Drucks, der auf mindestens eine Seite eines Endgeräts ausgeübt wird, ist: die Beschleunigung fällt in einen voreingestellten Bereich.

9. Endgerät nach Anspruch 8, wobei
das zweite Detektionsmodul (1280) ferner ausgelegt ist, Neigungszustandsdaten des Endgeräts zu detektieren, wobei die Neigungszustandsdaten eine Beschleunigung in der Referenzrichtung umfassen; und
das Endgerät ferner umfasst:
ein zweites Bestimmungsmodul (1290), das ausgelegt ist, den Bereich gemäß mindestens einer Beschleunigung zu bestimmen.

10. Endgerät nach Anspruch 6,
wobei das Bewegungsmodul (S1230) ferner spezifisch ausgelegt ist:
nach dem Vergrößern oder Verkleinern der Anzeigeschnittstelle gemäß einem voreingestellten Maßstab, die vergrößerte oder verkleinerte Anzeigeschnittstelle um die voreingestellte Distanz in der Bewegungsrichtung zu bewegen, die von dem ersten Bestimmungsmodul bestimmt wird; oder
nach dem Bewegen der Anzeigeschnittstelle um die voreingestellte Distanz in der Bewegungsrichtung, die von dem ersten Bestimmungsmodul bestimmt wird, die bewegte Anzeigeschnittstelle gemäß dem voreingestellten Maßstab zu vergrößern oder zu verkleinern.

## Revendications

1. Procédé de déplacement d'interface d'écran consistant :
à détecter (S100, S250, S330) une pression qui est appliquée sur au moins un côté d'un terminal par un utilisateur tenant le terminal d'une main pour obtenir une première caractéristique de distribution de pression ;
à comparer (S110, S260, S340) la première caractéristique de distribution de pression avec une caractéristique de distribution de pression dans un ensemble prégénéré pour obtenir une seconde caractéristique de distribution de pression qui correspond à la première caractéristique de distribution de pression ;
à déterminer (S120, S270, S350), en fonction d'une correspondance prédéfinie entre une caractéristique de distribution de pression et une direction de déplacement, une direction de déplacement correspondant à la seconde caractéristique de distribution de pression ; et
à déplacer (S130, S280, S360) une interface d'écran sur une distance prédéfinie dans la direction de déplacement déterminée,
**caractérisé en ce que**
la direction de déplacement est une direction d'une ligne de liaison allant d'un point tactile qui est appliqué sur l'interface d'écran, jusqu'à un point de référence et le point de référence est un point de référence prédéfini sur un bord prédéfini d'un écran et, avant la détection (S 100, S250) d'une pression qui est appliquée sur au moins un côté d'un terminal, le procédé consiste en outre :
à capturer (S200) le point tactile qui est appliqué sur l'interface d'écran ;
à détecter (S210) une pression qui est appliquée sur le ou les côtés du terminal lorsque le point tactile est capturé, pour obtenir la caractéristique de distribution de pression ;
à déterminer (S220) la ligne de liaison entre le point tactile et le point de référence et à calculer un angle entre la ligne de liaison et le bord prédéfini de l'écran pour déterminer la direction de la ligne de liaison en fonction de l'angle ;
à établir (S230) une correspondance entre la caractéristique de distribution de pression et l'angle ; et
à sauvegarder (S240) au moins une correspondance pour générer l'ensemble,
dans lequel une condition pour l'étape de détection d'une pression qui est appliquée sur le ou les côtés du terminal lorsque le point tactile est capturé, est : le point tactile se situe dans une zone prédéfinie.

2. Procédé selon la revendication 1, dans lequel la comparaison (S110, S260) de la première caractéristique de distribution de pression avec la caractéristique de distribution de pression dans l'ensemble prégénéré pour obtenir la seconde caractéristique de distribution de pression qui correspond à la première caractéristique de distribution de pression, consiste spécialement :
à calculer (S261) une similarité entre la première caractéristique de distribution de pression et une caractéristique de distribution de pression dans l'ensemble ; et
à déterminer (S262) qu'une caractéristique de distribution de pression ayant une similarité supérieure ou égale à un seuil prédéfini est la seconde caractéristique de distribution de pression.

3. Procédé selon la revendication 1, dans lequel, avant la détection (S100, S330) d'une pression qui est appliquée sur au moins un côté d'un terminal, le procédé consiste en outre :
à détecter (S320) des premières données d'état d'inclinaison du terminal, dans lequel les premières données d'état d'inclinaison comprennent une première accélération dans une direction de référence prédéfinie ; et
une condition pour la détection d'une pression qui est appliquée sur au moins un côté d'un terminal est : la première accélération se situe dans une plage prédéfinie.

4. Procédé selon la revendication 3, dans lequel, avant la détection (S320) de premières données d'état d'inclinaison du terminal, le procédé consiste en outre :
à détecter (S300) des données d'état d'inclinaison du terminal, dans lequel les données d'état d'inclinaison comprennent une accélération dans la direction de référence ; et
à déterminer (S310) la plage en fonction d'au moins une accélération.

5. Procédé selon la revendication 1, dans lequel le déplacement de l'interface d'écran sur la distance prédéfinie dans la direction de déplacement déterminée consiste spécialement :
après un ajustement de l'échelle vers le haut ou vers le bas de l'interface d'écran en fonction d'une échelle prédéfinie, à déplacer l'interface d'écran ayant subi un ajustement de l'échelle vers le haut ou vers le bas sur la distance prédéfinie dans la direction de déplacement déterminée ; ou
après le déplacement de l'interface d'écran sur la distance prédéfinie dans la direction de déplacement déterminée, à ajuster l'échelle vers le haut ou vers le bas de l'interface d'écran déplacée en fonction de l'échelle prédéfinie.

6. Terminal comprenant :
un premier module de détection (1200), configuré pour détecter une pression qui est appliquée sur au moins un côté d'un terminal par un utilisateur tenant le terminal d'une main pour obtenir une première caractéristique de distribution de pression ;
un module de comparaison (1210), configuré pour comparer la première caractéristique de distribution de pression obtenue par le premier module de détection avec une caractéristique de distribution de pression dans un ensemble prégénéré pour obtenir une seconde caractéristique de distribution de pression qui correspond à la première caractéristique de distribution de pression ;
un premier module de détermination (1220), configuré pour déterminer, en fonction d'une correspondance prédéfinie entre une caractéristique de distribution de pression et une direction de déplacement, une direction de déplacement correspondant à la seconde caractéristique de distribution de pression obtenue par le module de comparaison ; et
un module de déplacement (1230), configuré pour déplacer une interface d'écran sur une distance prédéfinie dans la direction de déplacement déterminée par le premier module de détermination,
**caractérisé en ce que**
la direction de déplacement est une direction d'une ligne de liaison allant d'un point tactile qui est appliqué sur l'interface d'écran, jusqu'à un point de référence et le point de référence est un point de référence prédéfini sur un bord prédéfini d'un écran et le terminal comprend en outre :
un module de capture (1240), configuré pour capturer le point tactile qui est appliqué sur l'interface d'écran, dans lequel
le premier module de détection (1200) est en outre configuré pour détecter une pression qui est appliquée sur le ou les côtés du terminal lorsque le module de capture capture le point tactile, pour obtenir la caractéristique de distribution de pression ;
un module de calcul (1250), configuré : pour déterminer la ligne de liaison entre le point tactile capturé par le module de capture et le point de référence et pour calculer un angle entre la ligne de liaison et le bord prédéfini de l'écran pour déterminer la direction de la ligne de liaison en fonction de l'angle ;
un module d'établissement (1260), configuré pour établir une correspondance entre la caractéristique de distribution de pression et l'angle ; et
un module de génération (1270), configuré pour sauvegarder au moins une correspondance pour générer l'ensemble,
dans lequel une condition pour la détection, par le premier module de détection (1200), d'une pression qui est appliquée sur le ou les côtés du terminal lorsque le point tactile est capturé, est : le point tactile se situe dans une zone prédéfinie.

7. Terminal selon la revendication 6, dans lequel le module de comparaison (1210) comprend :
une unité de calcul, configurée pour calculer une similarité entre la première caractéristique de distribution de pression et une caractéristique de distribution de pression dans l'ensemble ; et
une unité de détermination, configurée pour déterminer qu'une caractéristique de distribution de pression ayant une similarité supérieure ou égale à un seuil prédéfini est la seconde caractéristique de distribution de pression.

8. Terminal selon la revendication 6, le terminal comprenant en outre :
un second module de détection (1280), configuré pour détecter des premières données d'état d'inclinaison du terminal, dans lequel les premières données d'état d'inclinaison comprennent une première accélération dans une direction de référence prédéfinie ; et
une condition pour la détection, par le premier module de détection (1200), d'une pression qui est appliquée sur au moins un côté d'un terminal étant : la première accélération se situe dans une plage prédéfinie.

9. Terminal selon la revendication 8,
le second module de détection (1280) étant en outre configuré pour détecter des données d'état d'inclinaison du terminal, les données d'état d'inclinaison comprenant une accélération dans la direction de référence ; et
le terminal comprenant en outre :
un second module de détermination (1290), configuré pour déterminer la plage en fonction d'au moins une accélération.

10. Terminal selon la revendication 6, dans lequel le module de déplacement (S1230) est en outre spécialement configuré :
après un ajustement de l'échelle vers le haut ou vers le bas de l'interface d'écran en fonction d'une échelle prédéfinie, pour déplacer l'interface d'écran ayant subi un ajustement de l'échelle vers le haut ou vers le bas sur la distance prédéfinie dans la direction de déplacement déterminée par le premier module de détermination ; ou
après le déplacement de l'interface d'écran sur la distance prédéfinie dans la direction de déplacement déterminée par le premier module de détermination, pour ajuster l'échelle vers le haut ou vers le bas de l'interface d'écran déplacée en fonction de l'échelle prédéfinie.
